# EUROPEAN PATENT APPLICATION

(11) **EP 4 708 191 A1**
(43) Date of publication of application: **11.03.2026**
(21) Application number: 24800093.7
(22) Date of filing: 25.04.2024
(51) Int. Cl.: G06T 7/00

(54) **IMAGE PROCESSING DEVICE, IMAGE PROCESSING DEVICE OPERATION METHOD, IMAGE PROCESSING DEVICE OPERATION PROGRAM, AND LEARNING DEVICE**

(30) Priority: 01.05.2023 JP 2023075855
(71) Applicant: FUJIFILM Corporation, Tokyo 106-8620 (JP)
(72) Inventor: NEGISHI, Mitsuru, Ashigarakami-gun, Kanagawa 258-8577 (JP)
(74) Representative: HGF
(86) International application number: PCT/JP2024/016298
(87) International publication number: WO 2024/228362

(57) **Abstract**

An image processing apparatus includes a processor, in which an evaluation value in accordance with morphological characteristics of a tissue image is estimated using a machine learning model, the machine learning model is trained using a plurality of tissue image sets each including a plurality of training tissue images and provided with a relative rank based on the morphological characteristics of the training tissue image, the training is training in which the machine learning model is caused to estimate the evaluation value in accordance with the morphological characteristics of the training tissue image and the estimated evaluation value is made to conform to the relative rank, and the processor estimates the evaluation value of an acquired evaluation target using a trained machine learning model that has undergone the training.

## Description

### BACKGROUND OF THE INVENTION

### 1. Field of the Invention

The disclosed technology relates to an image processing apparatus, an operation method of an image processing apparatus, an operation program of an image processing apparatus, and a learning apparatus.

### 2. Description of the Related Art

US2021/0342570A describes a technology of using a machine learning model such as an autoencoder, extracting a feature value from a patch image, which is a tissue image obtained by subdividing a specimen image in which a tissue specimen such as a liver of an animal is captured, determining whether or not a morphological abnormality (hyperplasia, infiltration, congestion, inflammation, tumor, carcinogenesis, proliferation, hemorrhage, glycogen depletion, or the like) has occurred in the tissue specimen shown in the patch image based on the extracted feature value, and clustering the patch image in which the occurrence of the morphological abnormality has been determined into one of a plurality of clusters based on the feature value.

### SUMMARY OF THE INVENTION

Drug discovery staff members involved in the discovery process, including toxicologic pathology specialists (also known as pathologists), show strong interest, based on their specialized knowledge, in morphological abnormalities that greatly contribute to inferring mechanisms of toxicity. In a case in which the degree of interest is defined as an abnormality level, the abnormality level is different depending on a type of the morphological abnormality and a degree thereof. For example, in a case of ranking three types of morphological abnormalities, "necrosis", "cellular infiltration", and "eosinophilic change", by the abnormality level, the three types are generally ordered in this sequence. In a case of considering using a machine learning model to output a plurality of types of morphological abnormalities in order of the abnormality level, one possible learning method is to rank the abnormality levels of the plurality of types of morphological abnormalities on a unified scale and train the machine learning model on all of the abnormality levels ranked on the unified scale.

In this method, in a case of creating training data, it is necessary to perform annotation work of classifying and identifying the abnormality levels of the morphological abnormalities with a unified scale while observing the tissue image, and giving an annotation to the tissue image in accordance with the abnormality level. However, there are problems in that the burden of such an annotation work is very large.

One of the problems is that qualitative burden is high. That is, the types of morphological abnormalities are various, and thus the specialized knowledge is required for classifying and identifying such various morphological abnormalities. In addition, the determination criterion for the abnormality level varies from person to person. Therefore, it is very difficult to classify and identify the abnormality levels of all the morphological abnormalities with a unified scale from the viewpoint of the accuracy and the uniformity of the determination. In particular, there is an extreme difficulty in a case in which an operator who has little knowledge of the morphological abnormality performs the annotation. Another problem is that quantitative burden is high. Since a very large number of tissue images are required as the training data, the number of tissue images to be subjected to the annotation work is also large. The work of accurately classifying and identifying the morphological abnormalities while observing the morphological abnormalities in detail for a large number of tissue images as described above results in an enormous burden. As described above, the method of creating the training data in the related art has a problem in that the qualitative and quantitative burden of the annotation work is high.

One embodiment according to the disclosed technology provides an image processing apparatus, an operation method of an image processing apparatus, an operation program of an image processing apparatus, and a learning method capable of reducing a burden in a case of creating training data of a machine learning model, which is used to estimate an evaluation value in accordance with morphological characteristics of a tissue image, as compared with the related art.

The disclosed technology provides an image processing apparatus comprising a processor, in which an evaluation value in accordance with morphological characteristics of a tissue image obtained by subdividing a specimen image in which a tissue specimen of a subject is shown is estimated using a machine learning model, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, the training is training in which the machine learning model is caused to estimate the evaluation value in accordance with the morphological characteristics of the training tissue image and the estimated evaluation value is made to conform to the relative rank provided in the tissue image set to which the training tissue image belongs, and the processor is configured to execute: acquisition processing of acquiring the tissue image of which the evaluation value is unknown, as an evaluation target; and estimation processing of estimating the evaluation value of the acquired evaluation target using a trained machine learning model that has undergone the training.

It is preferable that the plurality of tissue image sets each include at least one training tissue image having a different relative rank.

It is preferable that the relative rank have two levels in one tissue image set.

It is preferable that at least one of the plurality of tissue image sets be an image set in which the plurality of training tissue images divided from two or more specimen images respectively showing two or more different tissue specimens derived from one or more subjects are mixed together.

It is preferable that the specimen image be an image showing a tissue specimen used in a test for evaluating at least one of drug efficacy or toxicity of a substance administered to the subject, as the tissue specimen.

It is preferable that the specimen image include a first specimen image showing the tissue specimen of the subject to which the substance has been administered and a second specimen image showing the tissue specimen of the subject to which the substance has not been administered, and the plurality of tissue image sets each include, as the training tissue image, a first training tissue image divided from the first specimen image and a second training tissue image divided from the second specimen image.

It is preferable that the plurality of tissue image sets be each composed of only the plurality of training tissue images derived from one or more subjects that have undergone a single test.

It is preferable that the relative rank have two levels in one tissue image set, and the two levels of the rank be distinguished by whether or not the training tissue image includes a principal abnormal finding for each test for evaluating at least one of drug efficacy or toxicity of a substance administered to the subject.

It is preferable that the relative rank based on the morphological characteristics be provided based on any one of an abnormality level of the morphological characteristics, severity of a lesion having the morphological characteristics, or a stage of progression of the lesion.

It is preferable that the processor be configured to output an evaluation result based on the evaluation value estimated for the evaluation target.

It is preferable that the processor be configured to output the evaluation result in a form in which magnitude of the evaluation value of the evaluation target is comparable with magnitude of the evaluation value of another evaluation target.

It is preferable that the processor be configured to, in a case in which a plurality of images divided from one specimen image are used as the evaluation targets, output the evaluation result in a form in which magnitude of the evaluation value for each region corresponding to a plurality of the evaluation targets in the specimen image is identifiable.

It is preferable that the processor be configured to generate a heatmap that is superimposable on the specimen image and in which the magnitude of the evaluation value for each region is identifiable by a shade of color.

Further, the disclosed technology provides an operation method of an image processing apparatus including a processor, in which an evaluation value in accordance with morphological characteristics of a tissue image obtained by subdividing a specimen image in which a tissue specimen of a subject is shown is estimated using a machine learning model, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, the training is training in which the machine learning model is caused to estimate the evaluation value in accordance with the morphological characteristics of the training tissue image and the estimated evaluation value is made to conform to the relative rank provided in the tissue image set to which the training tissue image belongs, and the operation method comprises causing the processor to execute: acquisition processing of acquiring the tissue image of which the evaluation value is unknown, as an evaluation target; and estimation processing of estimating the evaluation value of the acquired evaluation target using a trained machine learning model that has undergone the training.

Further, the disclosed technology provides an operation program of an image processing apparatus including a processor, the operation program causing a computer to function as the image processing apparatus, in which an evaluation value in accordance with morphological characteristics of a tissue image obtained by subdividing a specimen image in which a tissue specimen of a subject is shown is estimated using a machine learning model, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, the training is training in which the machine learning model is caused to estimate the evaluation value in accordance with the morphological characteristics of the training tissue image and the estimated evaluation value is made to conform to the relative rank provided in the tissue image set to which the training tissue image belongs, and the operation program causes the computer to execute: acquisition processing of acquiring the tissue image of which the evaluation value is unknown, as an evaluation target; and estimation processing of estimating the evaluation value of the acquired evaluation target using a trained machine learning model that has undergone the training.

Further, the disclosed technology provides a learning apparatus comprising a processor, in which the learning apparatus trains a machine learning model that estimates an evaluation value in accordance with morphological characteristics of a tissue image obtained by subdividing a specimen image in which a tissue specimen of a subject is shown, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, and the training is training in which the machine learning model is caused to estimate the evaluation value in accordance with the morphological characteristics of the training tissue image and the estimated evaluation value is made to conform to the relative rank provided in the tissue image set to which the training tissue image belongs.

According to the disclosed technology, in a case in which the machine learning model that estimates the evaluation value in accordance with the morphological characteristics of the tissue image is used, the burden in a case of creating the training data for the machine learning model can be reduced as compared with the burden in the related art.

### BRIEF DESCRIPTION OF THE DRAWINGS

FIG. 1 is a diagram showing a method of creating a specimen image and an image processing apparatus.
FIG. 2 is a diagram showing an example of an evaluation result output by the image processing apparatus.
FIG. 3 is a block diagram showing a computer including the image processing apparatus.
FIG. 4 is a block diagram showing a processor of the image processing apparatus.
FIG. 5 is a diagram showing an outline of processing of estimating an evaluation value from a patch image.
FIG. 6 is a diagram showing a feature value space used for estimating the evaluation value.
FIG. 7 is a diagram showing a relationship between a finding of a morphological abnormality of the patch image and an abnormality level.
FIG. 8 is a diagram showing a learning unit that trains an estimation model.
FIG. 9 is a diagram showing a label provided to a tissue image set.
FIG. 10 is a diagram conceptually showing an example in which the evaluation value does not conform to the label in training.
FIG. 11 is a diagram conceptually showing an example in which the evaluation value conforms to the label in training.
FIG. 12 is a diagram conceptually showing another example in which the evaluation value conforms to the label in training.
FIG. 13 is a diagram showing a relationship between a label indicating a relative rank in the tissue image set and the evaluation value.
FIG. 14 is a flowchart showing a processing procedure of the image processing apparatus in a training phase.
FIG. 15 is a flowchart showing a processing procedure of the image processing apparatus in an operation phase.
FIG. 16 is a diagram showing an example of a display screen on which a heatmap is displayed as the evaluation result.
FIG. 17 is a diagram showing another example of the display screen for displaying the heatmap as the evaluation result.
FIG. 18 is a diagram showing a display screen for displaying another aspect of the evaluation result.
FIG. 19 is a diagram showing an example of a report of a toxicity test.
FIG. 20 is a diagram showing three labels with the relative ranks.

### DESCRIPTION OF THE PREFERRED EMBODIMENTS

### [First Embodiment]

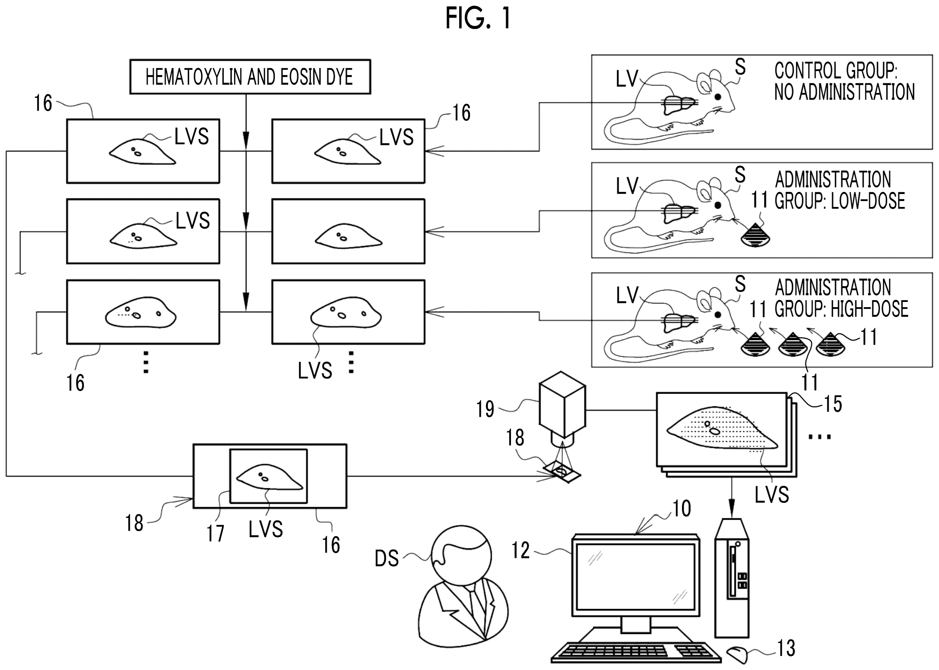

As shown in FIG. 1 as an example, an image processing apparatus 10 according to the present disclosure is used for evaluating drug efficacy and toxicity of a candidate substance 11 for a pharmaceutical. The image processing apparatus 10 is, for example, a desktop personal computer, and comprises a display 12 that displays various screens and an input device 13, such as a keyboard, a mouse, a touch panel, and/or a microphone for audio input. The image processing apparatus 10 is installed in, for example, a pharmaceutical development facility and is operated by a drug discovery staff member DS who is involved in the development of the pharmaceutical in the pharmaceutical development facility. The drug discovery staff member DS also includes a pathologist. The drug discovery staff member DS is an example of a "user" according to the disclosed technology.

A specimen image 15 is input to the image processing apparatus 10. The specimen image 15 is an image for evaluating the drug efficacy and the toxicity of the candidate substance 11 to be administered to a subject S. The image processing apparatus 10 detects a morphological abnormality of the specimen image 15 caused by the candidate substance 11, using a machine learning model. The specimen image 15 is generated, for example, by the following procedure. First, the subject S such as a rat prepared for the evaluation of the candidate substance 11 is autopsied, and a plurality of tissue specimens (hereinafter, "liver specimens") LVS of a cross section of an organ, here, the liver LV of the subject S, are collected. Next, the collected liver specimens LVS are attached one by one to a glass slide 16, and then the liver specimens LVS are stained, in this case, with hematoxylin and eosin dye. Subsequently, the liver specimens LVS after staining are covered with a cover glass 17 to complete a slide specimen 18. Then, the slide specimen 18 is set in an imaging apparatus 19 such as a digital optical microscope, and the specimen image 15 is captured by the imaging apparatus 19. A subject identification data (ID) for uniquely identifying the subject S, a specimen image ID for uniquely identifying the specimen image 15, a date and time of imaging, and the like are attached to the specimen image 15 obtained in this way. The tissue specimen is also referred to as a tissue section, and the specimen image 15 is also referred to as a whole slide image (WSI) because the specimen image 15 is an image showing the entire tissue section. The staining may be staining with a hematoxylin dye alone, staining with a nuclear fast red dye, or the like.

Here, an administration group and a control group will be described. The administration group is composed of a plurality of subjects S to which the candidate substance 11 has been administered. The control group is composed of a plurality of subjects S to which the candidate substance 11 has not been administered, contrary to the administration group. In a case of evaluating the drug efficacy and the toxicity of the candidate substance 11, an image showing the liver specimen LVS of the subject S in the administration group is used as the specimen image 15. It goes without saying that an image showing the liver specimen LVS of the subject S of the control group may be used as the specimen image 15 as a reference.

In addition, as will be described later, the specimen image 15 for training data for the machine learning model used by the image processing apparatus 10 includes an image showing the liver specimen LVS of the control group, in addition to the specimen image 15 showing the liver specimen LVS of the administration group. The number of subjects S forming the administration group and the number of subjects S forming the control group are both, for example, about 5 to 10. The subject S forming the administration group and the subject S forming the control group have the same attributes and are placed under the same breeding environment. The same attributes refer to, for example, the same age in weeks and/or the same sex. In addition, the same attributes also encompasses cases in which the composition ratio for age in weeks is the same and/or the composition ratio for sex is the same (for example, five males and five females). The same breeding environment refers to, for example, that the feed provided is the same, the temperature and humidity of the housing space are the same, and/or the size of the housing space is the same. The "same" in the same breeding environment refers not only to complete identity but also to sameness that includes tolerances generally acceptable in the technical field to which the present disclosure pertains, to the extent that such tolerances do not depart from the spirit of the present disclosure.

In the administration groups, there are a plurality of groups in which the doses of the candidate substance 11 are different. For example, the dose of the candidate substance 11 varies in three levels of a high-dose group, a medium-dose group, and a low-dose group. In this way, it is possible to determine the influence of the dose of the candidate substance 11 on the subject S. In FIG. 1, as the administration groups, two groups of a low-dose group and a high-dose group are shown.

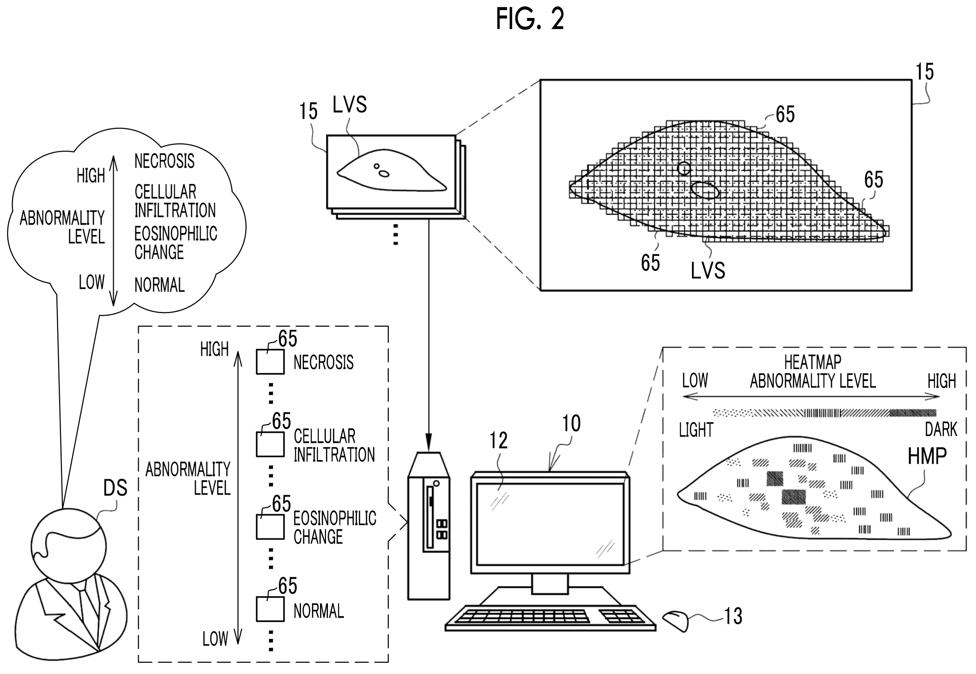

As shown in FIG. 2 as an example, the image processing apparatus 10 recognizes the liver specimen LVS shown in the specimen image 15 input using a well-known image recognition technique, and subdivides the recognized liver specimen LVS into a plurality of patch images 65. That is, the patch image 65 is an image in which a region of the liver specimen LVS, which is the entirety of the tissue section, is divided into small sections. The patch image 65 has a predetermined size that can be handled by the machine learning model of the image processing apparatus 10. The image processing apparatus 10 assigns an image ID to each subdivided patch image 65, and associates the image ID with positional information indicating which position of the specimen image 15 is cut out in each patch image 65. The patch image 65 does not have a region overlapping with the other patch images 65 in FIG. 2, but the patch image 65 may partially overlap with the other patch images 65.

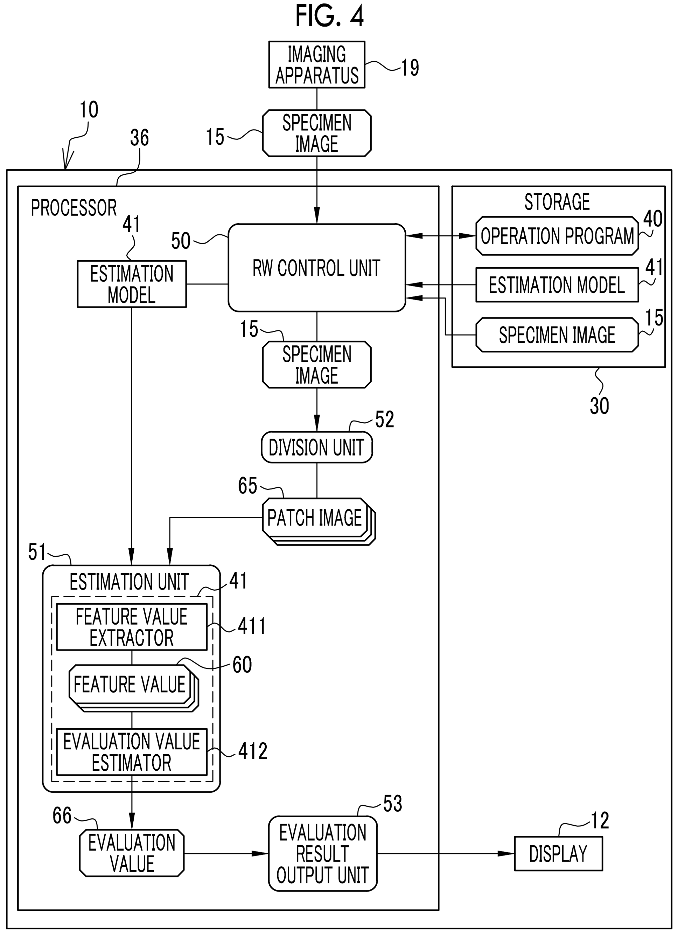

The image processing apparatus 10 estimates an evaluation value 66 (see FIG. 4 and the like) representing an abnormality level of the morphological abnormality for each of the subdivided patch images 65 using the machine learning model. The machine learning model of the image processing apparatus 10 is trained to estimate the evaluation value 66 that conforms to a determination criterion of the drug discovery staff member DS including the pathologist for the morphological abnormality of the patch image 65. The determination criterion of the drug discovery staff member DS is a determination criterion for the drug discovery staff member DS to determine whether the abnormality level of the morphological abnormality of the patch image 65 is high or low.

The morphological abnormality means a lesion that is not observed in the normal liver specimen LVS. The morphological abnormality is an example of "morphological characteristics" according to the disclosed technology. Examples of findings of the morphological abnormalities include "necrosis", "cellular infiltration", and "eosinophilic change". The "cellular infiltration" is, for example, inflammatory cellular infiltration. In a normal case, since no abnormal findings are observed, the abnormality level is the lowest. In general, a degree of interest of the drug discovery staff member DS is higher as the abnormality level of the morphological abnormality is higher or the morphological abnormality is observed as being more serious. Since there are many patch images 65 that the drug discovery staff member DS must observe, the drug discovery staff member DS desires to observe the patch image 65 focusing on a portion having a high abnormality level. Therefore, the image processing apparatus 10 estimates the evaluation value 66 indicating the abnormality level of the morphological abnormality for the patch image 65 to output the evaluation result that enables highlight display or preferential display of the region with a high abnormality level in the liver specimen LVS.

A heatmap HMP shown in FIG. 2 is an example of an evaluation result output by the image processing apparatus 10. In the present example, the patch images 65 as evaluation targets are a plurality of patch images 65 divided from one specimen image 15. The heatmap HMP has a contour of the liver specimen LVS, and displays the magnitude of the evaluation value 66 indicating the abnormality level for each region corresponding to the plurality of patch images 65 in the specimen image 15 in an identifiable manner. The heatmap HMP has, for example, the contour of the liver specimen LVS. In the heatmap HMP, the magnitude of the evaluation value 66 indicating the abnormality level of each region of the liver specimen LVS can be identified by the shade of color, and the higher the abnormality level, the darker the color, and the lower the abnormality level, the lighter the color. In the present example, the color of the necrosis region having the highest abnormality level of the morphological abnormality is dark, and the color is changed to be gradually lighter in the order of necrosis, cellular infiltration, eosinophilic change, and normal. Such a heatmap HMP is an example of a display aspect in which a region having a high abnormality level is displayed in a highlighted manner.

In the present example, three types, such as necrosis, cellular infiltration, and eosinophilic change, are shown as the findings of the morphological abnormalities, but other findings include hyperplasia, congestion, inflammation, tumors, carcinogenesis, proliferation, hemorrhage, and glycogen depletion.

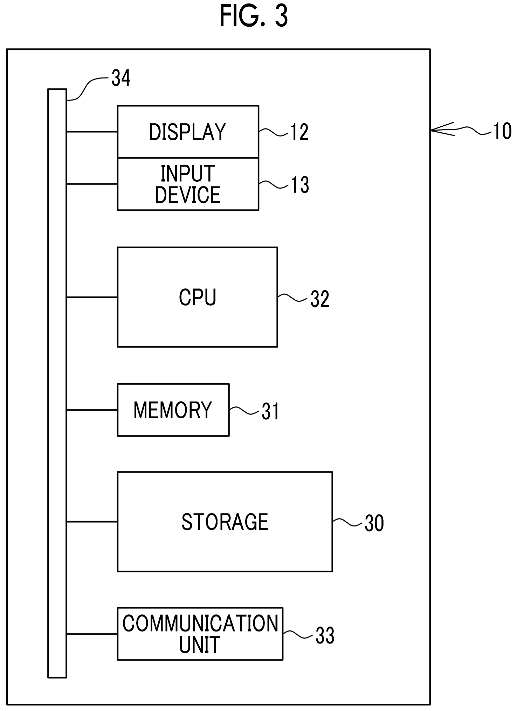

As shown in FIG. 3 as an example, a computer including the image processing apparatus 10 includes a storage 30, a memory 31, a central processing unit (CPU) 32, and a communication unit 33, in addition to the display 12 and the input device 13. These units are connected to one another via a busline 34.

The storage 30 is a hard disk drive that is built in the computer constituting the image processing apparatus 10 or is connected thereto via a cable or a network. Alternatively, the storage 30 is a disk array in which a plurality of hard disk drives are connected in combination. The storage 30 stores a control program, such as an operating system, various application programs, various types of data associated with these programs, and the like. In addition, a solid state drive may be used instead of the hard disk drive.

The memory 31 is a work memory for the CPU 32 to execute processing. The CPU 32 loads the program stored in the storage 30 into the memory 31, and executes processing corresponding to the program. Therefore, the CPU 32 controls the overall operation of the respective units of the computer. The CPU 32 is an example of a "processor" according to the disclosed technology. In addition, the memory 31 may be provided in the CPU 32. The communication unit 33 controls the transmission of various information to an external apparatus such as the imaging apparatus 19.

As shown in FIG. 4 as an example, an operation program 40 is stored in the storage 30 of the image processing apparatus 10. The operation program 40 is an application program causing the computer to function as the image processing apparatus 10. That is, the operation program 40 is an example of an "operation program of an image processing apparatus" according to the disclosed technology. An estimation model 41 is stored in the storage 30. The estimation model 41 is a machine learning model that is a part of the operation program 40, and the estimation model 41 is an example of a "machine learning model" according to the disclosed technology.

In a case in which the operation program 40 is started, the CPU 32 of the computer constituting the image processing apparatus 10 functions as the processor 36 having a read/write (hereinafter, abbreviated as RW) control unit 50, an estimation unit 51, a division unit 52, and an evaluation result output unit 53, in cooperation with the memory 31 and the like.

The RW control unit 50 controls the storage of various data in the storage 30 and the reading-out of various data in the storage 30. For example, the RW control unit 50 stores the specimen image 15 from the imaging apparatus 19 in the storage 30. Since a plurality of specimen images 15 are obtained from one subject S, the plurality of specimen images 15 derived from one subject S are stored in the storage 30.

The RW control unit 50 acquires the specimen image 15 designated by the drug discovery staff member DS through the input device 13 by reading out the specimen image 15 from the storage 30. The specimen image 15 acquired by the RW control unit 50 is, for example, a target for determining whether or not the morphological abnormality has occurred in the liver specimen LVS due to the administration of the candidate substance 11. The RW control unit 50 outputs the specimen image 15 to the division unit 52. The division unit 52 subdivides the specimen image 15 and divides the specimen image 15 into the plurality of patch images 65. The division unit 52 outputs the plurality of divided patch images 65 to the estimation unit 51.

The RW control unit 50 reads out the estimation model 41 from the storage 30, and outputs the readout estimation model 41 to the estimation unit 51.

The estimation model 41 includes a feature value extractor 411 and an evaluation value estimator 412. The estimation unit 51 extracts a feature value 60 from the patch image 65 using the feature value extractor 411. The estimation unit 51 estimates the evaluation value 66 based on the feature value 60 using the evaluation value estimator 412, and outputs the estimated evaluation value 66 to the evaluation result output unit 53.

Here, the patch image 65 is an example of a "tissue image of which the evaluation value is unknown" according to the disclosed technology. The processor 46 including the RW control unit 50 and the estimation unit 51 executes acquisition processing of acquiring the patch image 65 of which the evaluation value is unknown, as the evaluation target, and estimation processing of estimating the evaluation value 66 of the acquired patch image 65 which is the evaluation target using a trained estimation model 41 that has undergone the training, which will be described later.

The evaluation result output unit 53 generates, for example, the heatmap HMP of the liver specimen LVS based on the evaluation value 66 of each of the plurality of patch images 65, and outputs the generated heatmap HMP.

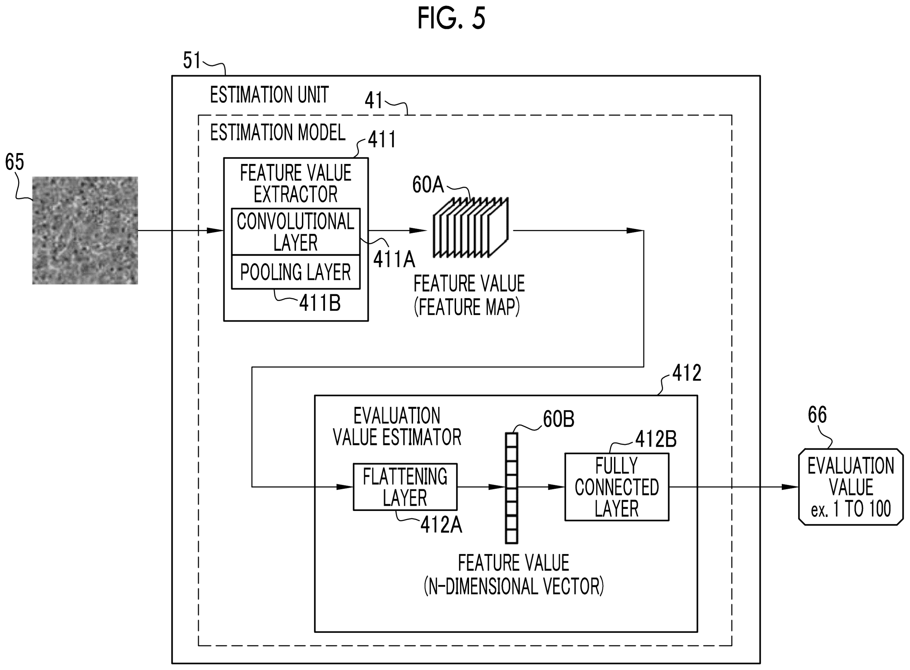

As shown in FIG. 5 as an example, the feature value extractor 411 is a well-known convolutional neural network including a convolutional layer 411A and a pooling layer 411B, and extracts the feature value 60 indicating the morphological characteristics of the patch image 65. That is, the convolutional layer 411A outputs, as the feature value, the product sum of a pixel value of the patch image 65 and a coefficient of a filter by using, for example, a filter having a coefficient matrix of a square size such as 3 × 3. Then, the convolutional layer 411A outputs a feature map 60A as the feature value 60 by applying the filter while shifting the filter to each region of the patch image 65. The feature map 60A is two-dimensional data that preserves the spatial features of the patch image 65 and represents the shape and texture features of the liver specimen LVS shown in the patch image 65. In the feature value extractor 411, in order to extract various morphological characteristics of the patch image 65, a plurality of filters of different types are prepared, and the feature map 60A is output for each filter. The number of output feature maps 60A corresponds to the number of filters.

The pooling layer 411B gradually reduces the size of the patch image 65 by maximum value pooling or the like in accordance with the pixel value of the patch image 65. The convolutional layer 411A applies the filter to the patch image 65 of which the size is gradually reduced, and outputs the feature map 60A. That is, the convolutional layer 411A outputs the feature map 60A for each of the patch images 65 of different sizes. Accordingly, a variety of characteristics, from fine-scale to global, are extracted from the patch image 65. As described above, the number of output feature map 60A corresponds to the number of patch images 65 having different types and sizes of filters.

For such a feature value extractor 411, for example, an encoder section of an autoencoder, which is one of the machine learning models used for images, may be repurposed. As well known, the autoencoder includes an encoder section that performs convolution processing and pooling processing on an input image to extract a feature value of the input image, and a decoder section that restores the input image from the extracted feature value. The encoder section and the decoder section are trained so that the input image is accurately restored in the decoder section. Accurate restoration of the input image in the decoder section means that an appropriate feature value of the input image has been extracted in the encoder section. Therefore, in the autoencoder that can appropriately restore the input image, only the encoder section can be used as the feature value extractor 411.

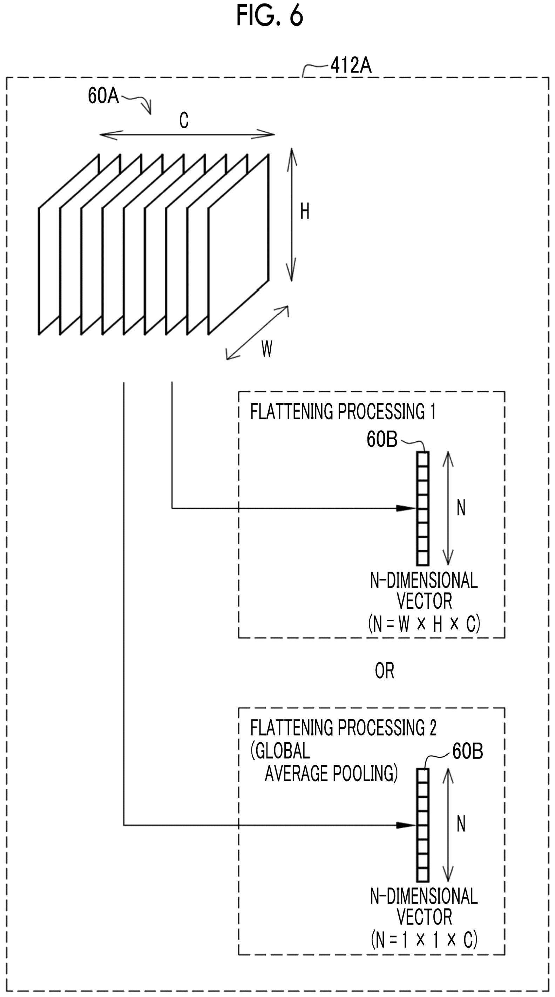

The evaluation value estimator 412 includes, for example, a flattening layer 412A and a fully connected layer 412B. The flattening layer 412A converts the feature map 60A into an N-dimensional vector. The expression "N" of the N-dimension is, for example, the number of dimensions of the order, such as 512 dimensions and 1024 dimensions. As shown in FIG. 6 as an example, the flattening layer 412A performs first flattening processing (referred to as "flattening processing 1" in FIG. 6). The feature map 60A has a size of W (width) × H (height) × C (number of channels). The first flattening processing converts the image into the vector having the number of dimensions of W × H × C. That is, the first flattening processing is performed to convert the feature map 60A into the vector of the number of data (W × H × C) of elements.

Alternatively, the flattening layer 412A may convert the feature map 60A into the N-dimensional vector by second flattening processing (referred to as "flattening processing 2" in FIG. 6). The second flattening processing is, for example, global average pooling, and, in this case, the feature map 60A is converted into the vector having the number of dimensions of 1 × 1 × C. That is, in the global average pooling, the feature map 60A having a size of W × H × C is pooled to a size of 1 × 1 × C. The flattening layer 412A outputs, as a feature value vector 60B, the N-dimensional vector flattened by the first flattening processing or the second flattening processing.

The fully connected layer 412B is composed of, for example, a neural network in which a plurality of perceptrons each having a plurality of input nodes to which a plurality of input values are input and an output node that outputs one output value which is a product sum of the input value input to each input node and a coefficient are combined, and is a layer that fully connects all input values input to all the input nodes of the plurality of perceptrons. The fully connected layer 412B receives the feature value vector 60B as input, and outputs the evaluation value 66 which is one scalar value.

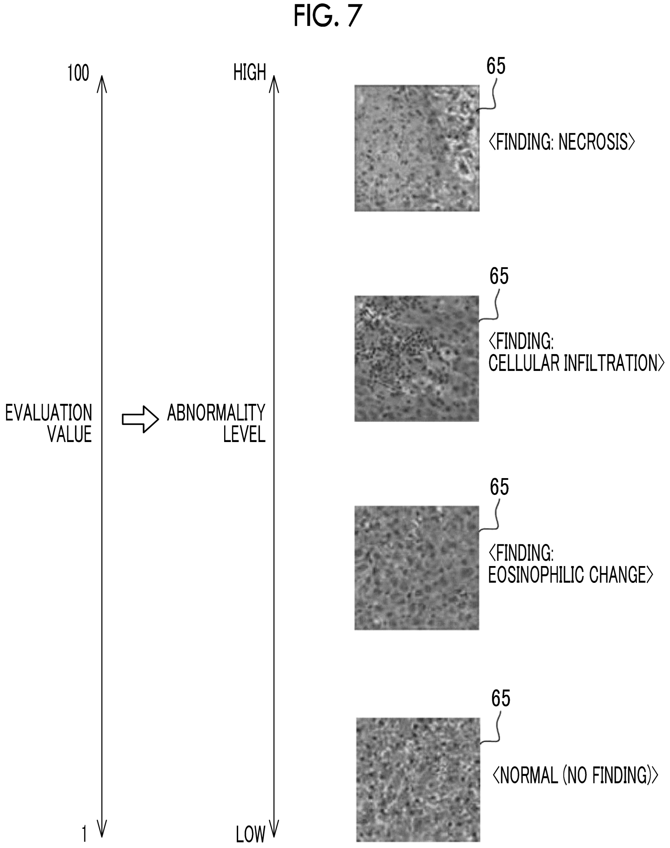

FIG. 7 is a diagram conceptually showing a relationship between the magnitude of the evaluation value 66 output by the evaluation value estimator 412 and the abnormality level of the morphological abnormality. As shown in FIG. 7 as an example, the evaluation value estimator 412 outputs the estimated evaluation value 66 as, for example, a value normalized in a range of 1 to 100. The feature value extractor 411 extracts the feature value corresponding to the morphological characteristics of the patch image 65, so that similar feature values are extracted for the patch images 65 having similar morphological characteristics. That is, the evaluation value estimator 412 outputs the evaluation values 66 of the same magnitude for the patch images 65 having similar morphological characteristics. The evaluation value estimator 412 is trained to output a larger evaluation value 66 as the morphological characteristics corresponding to the finding with the higher abnormality level of the morphological abnormality is observed in each patch image 65. That is, the morphological abnormalities corresponding to the findings of "necrosis", "cellular infiltration", and "eosinophilic change" have larger evaluation values 66 in this order.

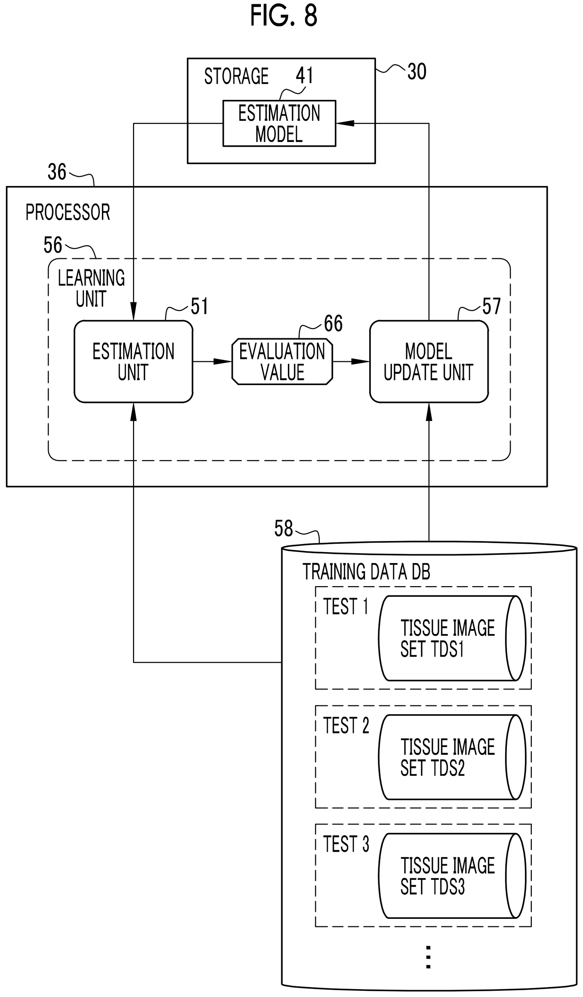

Hereinafter, a learning method and training data for training the estimation model 41 that estimates the evaluation value 66 will be described with reference to FIGS. 8 to 13.

As shown in FIG. 8 as an example, the processor 36 also functions as a learning unit 56 that trains the estimation model 41. The learning unit 56 includes the estimation unit 51 and a model update unit 57. The learning unit 56 updates the estimation model 41 by training the estimation model 41 using the training data stored in a training data database (DB) 58 and correcting various parameters of the estimation model 41 by the model update unit 57. The image processing apparatus 10 including the learning unit 56 is an example of a learning apparatus according to the disclosed technology.

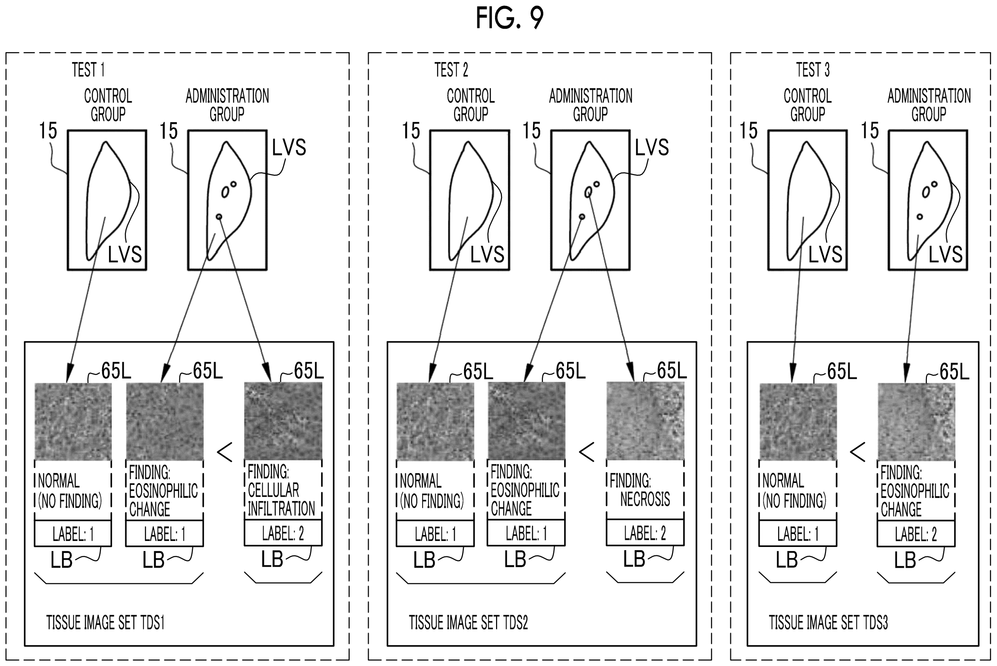

The training data DB 58 stores tissue image sets TDS. The tissue image set TDS is created for each type of test, such as a toxicity test, that is performed. In FIG. 8, a tissue image set TDS1 including a patch image 65L (see FIG. 9) on which a test 1 is performed, a tissue image set TDS2 including a patch image 65L on which a test 2 is performed, and a tissue image set TDS3 including a patch image 65L on which a test 3 is performed are shown. As described above, the plurality of tissue image sets TDS1 to TDS3 belong to any one of a plurality of test groups having different types of tests, such as the toxicity test. Hereinafter, in a case in which the tissue image set TDS is identified for each type of test, subdivision codes "1" to "3" are added after the code "TDS", but, in a case in which the distinction is not necessary, only the code "TDS" is added without using the subdivision codes. Since the patch image 65L is a patch image of the training data, "L" is provided to the patch image 65 as the subdivision code. In the disclosed technology, the patch image 65L is an example of a "training tissue image".

As shown in FIG. 9 as an example, the tissue image set TDS includes a plurality of patch images 65L for training. The patch image 65L is a tissue image obtained by subdividing the specimen image 15 showing the liver specimen LVS used in the test for evaluating at least one of the drug efficacy or the toxicity of the substance administered to the subject S. That is, the tissue image set TDS is a set of the patch images 65L on which the test has been performed. As described above, the specimen image 15 includes a specimen image 15 (an example of a first specimen image according to the disclosed technology) showing the liver specimen LVS of the administration group (the subject S to which the candidate substance 11 has been administered) and a specimen image 15 (an example of a second specimen image according to the disclosed technology) showing the liver specimen LVS of the control group (the subject S to which the candidate substance 11 has not been administered). In the present example, the plurality of tissue image sets TDS1 to TDS3 include both a patch image 65L (an example of a first training tissue image according to the disclosed technology) divided from the specimen image 15 derived from the administration group and a patch image 65L (an example of a second training tissue image according to the disclosed technology) divided from the specimen image 15 derived from the control group.

As described above, each of the plurality of tissue image sets TDS1 to TDS3 is an image set in which a plurality of patch images 65L (an example of training tissue images) divided from two or more specimen images 15 respectively showing two or more different liver specimens LVS (an example of a tissue specimen) derived from one or more subjects S are mixed together. In addition, since each of the plurality of tissue image sets TDS1 to TDS3 is created for each type of test, each of the plurality of tissue image sets TDS1 to TDS3 is composed of only the plurality of patch images 65L derived from one or more subjects S that have undergone a single test.

A label LB is provided to the patch image 65L. The label LB is a relative rank between the patch images 65L in each of the tissue image sets TDS, and indicates a relative rank based on the morphological characteristics. The label LB is an example of "labeled information" according to the disclosed technology. In the present example, since the estimation model 41 outputs the abnormality level of the morphological abnormality of the patch image 65 as the evaluation value 66, the label LB indicating the relative rank of the patch image 65L in the tissue image set TDS indicates the rank corresponding to the abnormality level. That is, the relative rank is information indicating which patch image 65L has a high abnormality level in the tissue image set TDS, and is not an indicator that can be compared with the patch image 65L included in another tissue image set TDS. In contrast, as shown in FIGS. 5 to 7, the evaluation value 66 is a scalar value output based on the morphological characteristics extracted from each patch image 65L, and similar morphological characteristics have similar magnitude.

Therefore, the evaluation value 66 is an indicator that can be compared even between the patch images 65L included in different tissue image sets TDS. In this point, the label LB indicating the relative rank is different from the evaluation value 66.

Specifically, in the tissue image set TDS1 of the test 1, the label LB "2" is provided to the patch image 65L in which "cellular infiltration" is observed as the finding. On the other hand, the other patch images 65L, that is, the patch images 65L in which "eosinophilic change" is observed as the finding and the normal patch images 65L in which the abnormal finding is not observed are provided with "1" as the label LB. In the present example, a larger value of the label LB indicates a higher relative rank. That is, "2" has a higher rank than "1". In the test 1, the morphological abnormality with the highest abnormality level is "cellular infiltration", and whether or not "cellular infiltration" is observed is a principal abnormal finding of the most interest to the drug discovery staff member DS. Therefore, in the tissue image set TDS1 of the test 1, "2" which is the highest rank in the tissue image set TDS1 is provided to the patch image 65L in which "cellular infiltration" is observed. In addition, in the test 1, "eosinophilic change" is not relatively important, and "1" of the same rank as the normal patch image 65L is provided to the patch image 65L in which "eosinophilic change" is observed as the finding, as the label LB.

Although not shown in this example, in a case in which there is the patch image 65L in which the finding having a lower abnormality level than "cellular infiltration" is observed in the tissue image set TDS1, in addition to "eosinophilic change", "1" of the same rank as "eosinophilic change" is also provided to the patch image 65L as the label LB.

On the other hand, in the test 2, the morphological abnormality having the highest abnormality level in the test 2 is "necrosis", and whether or not "necrosis" is observed is the principal abnormal finding of the most interest to the drug discovery staff member DS. Therefore, in the tissue image set TDS2 of the test 2, "2" which is the highest rank in the tissue image set TDS2 is provided to the patch image 65L in which "necrosis" is observed. In addition, in the test 2, "cellular infiltration" is not relatively important, and "1" of the same rank as the normal patch image 65L is provided to the patch image 65L in which "cellular infiltration" is observed as the finding, as the label LB. Although not shown, in the tissue image set TDS2, "1" is also provided to the patch image 65L in which "eosinophilic change" is observed as the finding, as the label LB. In the tissue image set TDS2, "1" is provided to the patch image 65L in which the finding with a lower abnormality level than "necrosis" such as "eosinophilic change" is observed, as the label LB, in addition to "cellular infiltration".

Similarly, in the test 3, the morphological abnormality having the highest abnormality level in the test 3 is "eosinophilic change", and whether or not "eosinophilic change" is observed is the principal abnormal finding of the most interest to the drug discovery staff member DS. Therefore, in the tissue image set TDS3 of the test 3, "2" is provided as the label LB of the patch image 65L in which "eosinophilic change" is observed as the finding, and "1" is provided as the label LB of the other patch images 65L, that is, the normal patch image 65L in which no abnormal finding is observed.

It goes without saying that, in the determination criterion of the drug discovery staff member DS, the abnormality level of the morphological abnormality of the patch image 65 is high in the order of "necrosis", "cellular infiltration", and "eosinophilic change". The label LB is a relative rank in the tissue image set TDS, but the label LB is provided in a form that conforms to the determination criterion of the drug discovery staff member DS. That is, the label LB is not provided regardless of the morphological characteristics of the patch image 65L, but is a relative rank based on the morphological characteristics. In the present example, in any of the tissue image sets TDS, "necrosis" has a higher rank of the label LB than the other findings. Accordingly, rank reversals, in which in one tissue image set TDS the rank is higher than that of "cellular infiltration" but in another tissue image set TDS it is lower, essentially do not occur. It goes without saying that, although rank reversals may occur in some tissue image sets TDS as exceptions, even in such cases, the number of tissue image sets TDS in which no rank reversal occurs should be greater. Therefore, the estimation model 41 can learn the priority ranks, that is, the ranks of the abnormal findings that conform to the determination criterion of the drug discovery staff member DS.

As described above, the plurality of tissue image sets TDS1 to TDS3 each include at least one patch image 65L having a different relative rank. In addition, in the present example, in one tissue image set TDS, there are two labels LB of "2" and "1", and the relative rank has two levels. Further, the two levels of the rank are distinguished depending on whether or not the patch image 65L includes the principal abnormal finding for each test.

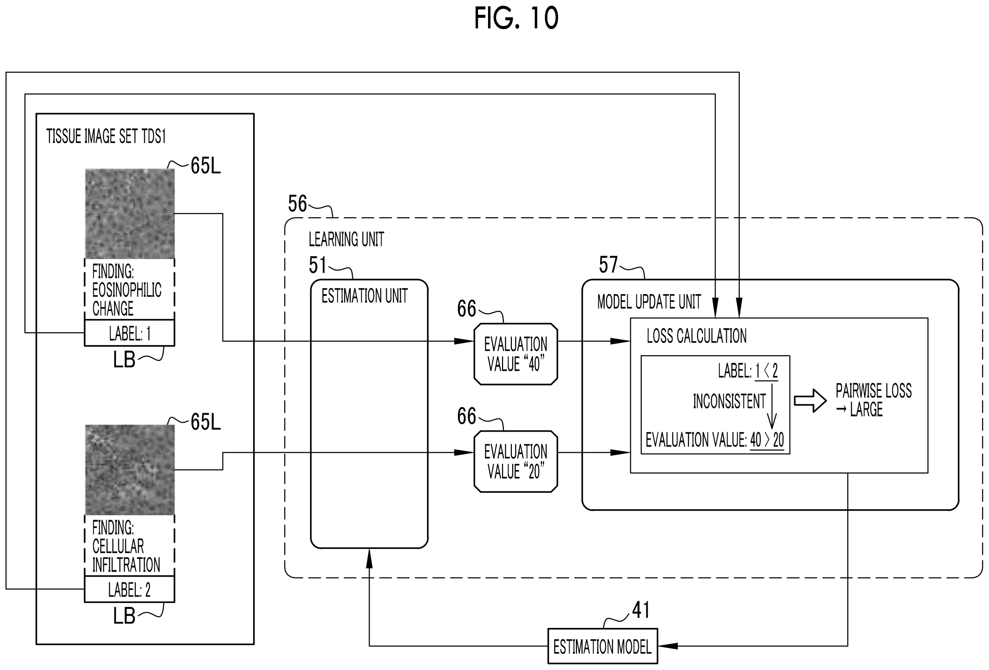

The learning method performed by the learning unit 56 using the plurality of of tissue image sets TDS provided with the label LB will be described with reference to FIGS. 10 to 12. The learning unit 56 performs ranking learning on the estimation model 41 based on the label LB of each of the plurality of tissue image sets TDS. As well known, the ranking learning is one of machine learning, and is a method suitable for ranking a plurality of items such as what order is appropriate for presenting the search results. The estimation model 41 according to the present example is intended to estimate the evaluation value 66 indicating the abnormality level of the morphological abnormality for each of the plurality of patch images 65, and the abnormality level can be an indicator for ranking the patch images 65. Therefore, the ranking learning can be applied to the estimation model 41.

In the present example, the learning unit 56 performs the ranking learning on the estimation model 41 using, for example, a pairwise loss. The ranking learning using the pairwise loss is a learning method that enables overall ranking of a plurality of items based on information on a rank related to which of two items selected from among the plurality of items is highly evaluated. The pairwise loss is one of loss functions used in the ranking learning, and is used to evaluate a relative importance between two items. The pairwise loss is increased for the results that do not conform to the information on the ranking.

In a case of being applied to the present example, the model update unit 57 performs loss calculation of calculating the pairwise loss based on two evaluation values 66 estimated by the estimation model 41. The label LB indicating a relative rank in the tissue image set TDS is provided in advance to the patch image 65L. In the loss calculation, in a case in which a relationship between the two evaluation values 66 does not conform to (is inconsistent with) the relative rank indicated by the label LB, the model update unit 57 increases the pairwise loss, and in a case in which the relationship conforms to the relative rank indicated by the label LB, the model update unit 57 decreases the pairwise loss. In a case in which the pairwise loss is increased, the model update unit 57 updates the estimation model 41 by adjusting the parameters of the estimation model 41 so that the pairwise loss is decreased. An amount of adjustment of the parameters changes in accordance with the magnitude of the pairwise loss.

In the example shown in FIG. 10, the estimation unit 51 estimates the evaluation value 66 of the patch image 65L of "eosinophilic change" to which "1" is provided as the label LB in the tissue image set TDS1, as "40". Meanwhile, the evaluation value 66 of the patch image 65L of "cellular infiltration" to which "2" is provided as the label LB is estimated as "20". In this case, since the order indicating the magnitude of the two evaluation values 66 does not conform to the rank of the labels LB, the pairwise loss is increased. In this case, the amount of adjustment of the parameters of the estimation model 41 is large.

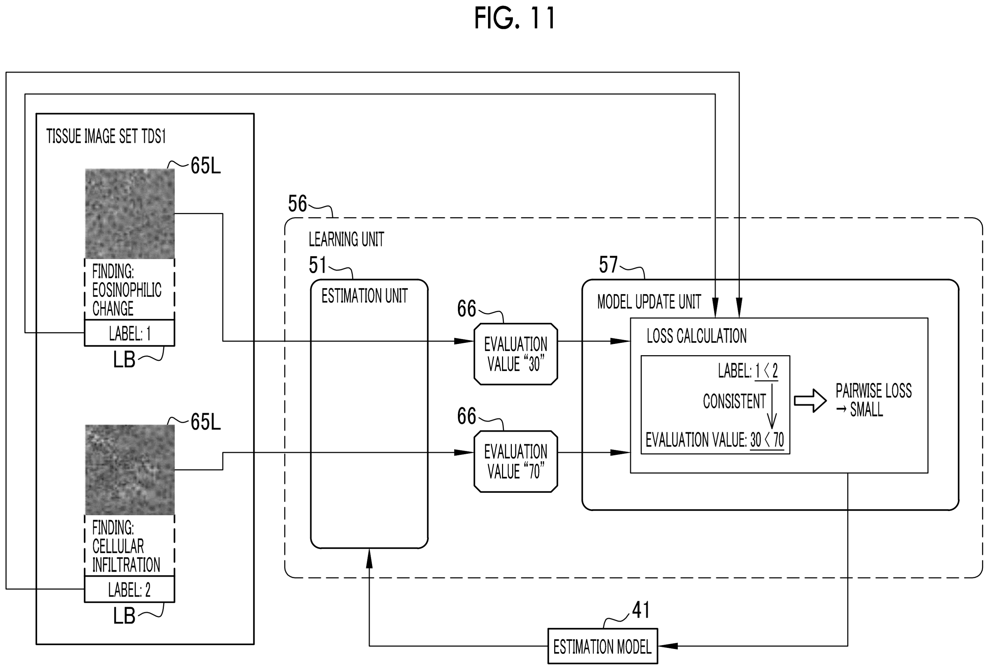

On the other hand, in the example shown in FIG. 11, the estimation unit 51 estimates the evaluation value 66 of the patch image 65L of "eosinophilic change" to which "1" is provided as the label LB in the tissue image set TDS1, as "30". Meanwhile, the evaluation value 66 of the patch image 65L of "cellular infiltration" to which "2" is provided as the label LB is estimated as "70". In this case, since the order of the magnitude of the two evaluation values 66 conforms to the rank of the labels LB, the pairwise loss is decreased. In this case, the amount of adjustment of the parameters of the estimation model 41 is small.

The learning unit 56 repeatedly performs learning processing so that the pairwise loss is decreased for all combinations of two patch images 65L selected from among the plurality of patch images 65L included in the tissue image set TDS1, for example. As a result, the estimation model 41 is trained so that the evaluation value 66 that conforms to the label LB is output for each patch image 65L in the tissue image set TDS1.

In a case in which the training using the training data of the tissue image set TDS1 of the test 1 has ended, the learning unit 56 performs the training using the training data of the tissue image sets TDS2 and TDS3 other than the test 1, for example, in the order of the test 2 and the test 3.

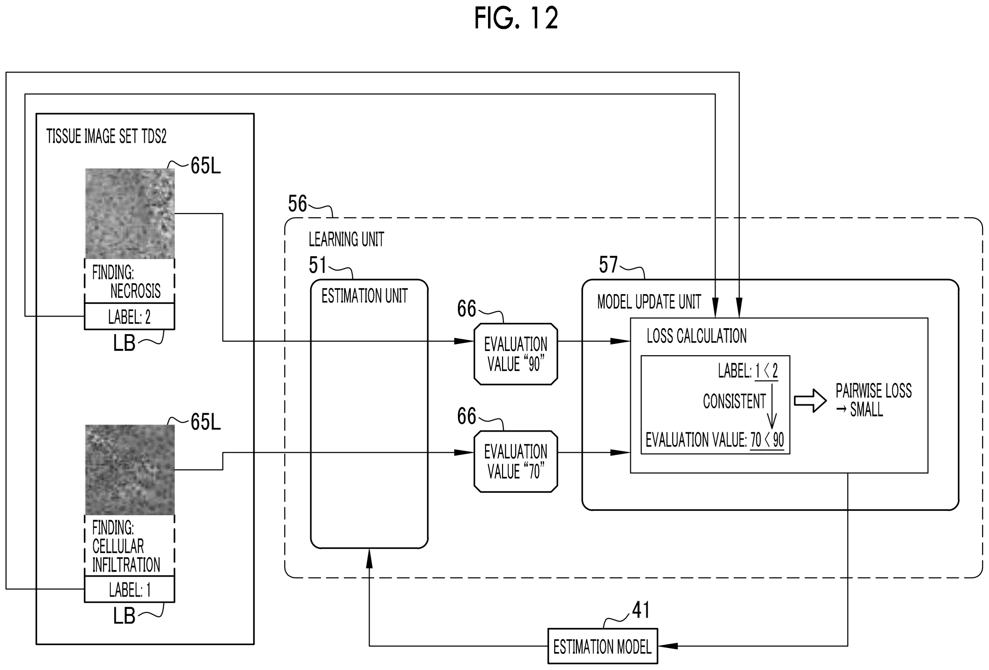

As shown in FIG. 12 as an example, for the tissue image set TDS2 of the test 2 as well, similarly to the tissue image set TDS1 of the test 1, the learning unit 56 estimates two evaluation values 66 for two patch images 65L in the tissue image set TDS2 by the estimation unit 51. Then, the model update unit 57 calculates the pairwise loss of the two evaluation values 66 by the loss calculation. The learning unit 56 adjusts the parameters of the estimation model 41 in accordance with the magnitude of the calculated pairwise loss. In the example shown in FIG. 12, the evaluation value 66 of the patch image 65L provided with "2" as the label LB is "90", the evaluation value 66 of the patch image 65L provided with "1" as the label LB is "70", and the order of the magnitude of the evaluation value 66 conforms to the rank of the label LB. Therefore, the pairwise loss is decreased.

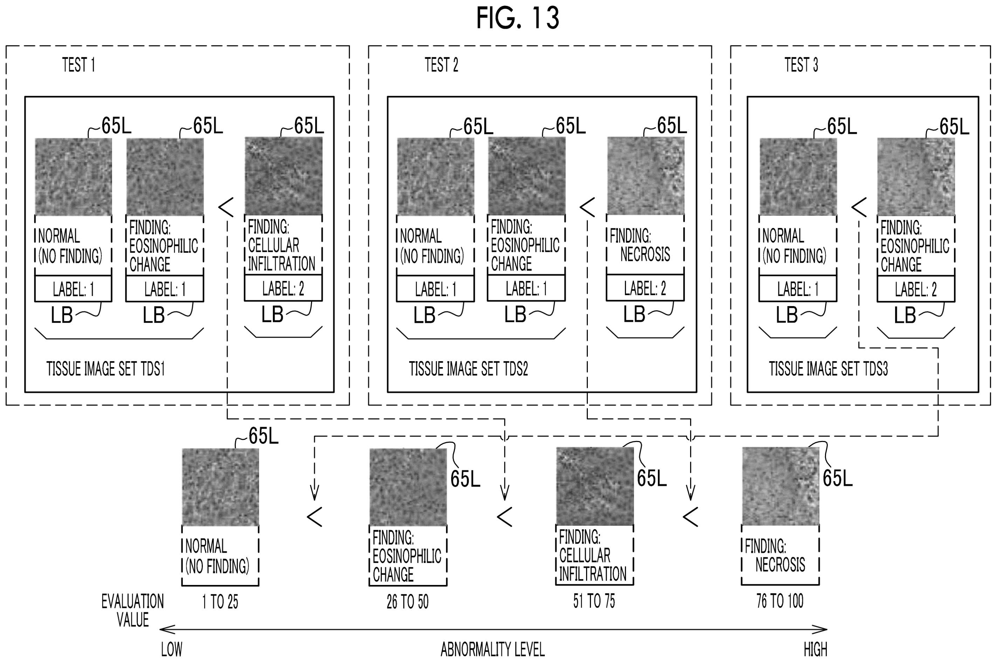

As described above, the estimation model 41 is trained so that the evaluation value 66 of the patch image 65L conforms to the label LB of each patch image 65L in the plurality of tissue image sets TDS. As shown in FIG. 13, the training is performed for each tissue image set TDS based on the label LB, but as described above, the rank of the labels LB in each tissue image set TDS is provided in a form that conforms to the determination criterion of the drug discovery staff member DS (the orders of the abnormality levels such as "necrosis", "cellular infiltration", and "eosinophilic change"). Therefore, by performing the training to conform to the label LB for each tissue image set TDS, the evaluation values 66 estimated by the estimation model 41 likewise become values that conform to the order of the abnormality level in the determination criterion of the drug discovery staff member DS.

More specific description will be made. As described above, the evaluation value 66 estimated by the estimation model 41 is a value corresponding to the morphological characteristics of the patch image 65L, and, in a case in which the plurality of patch images 65L have similar morphological characteristics, the magnitude is also similar. Based on such an estimation model 41, the training is performed so that the order of the magnitude of the evaluation value 66 estimated by the estimation model 41 conforms to the relative rank based on the label LB.

That is, the estimation model 41 also learns a correspondence between the feature value of each patch image 65L included in each of the tissue image sets TDS1 to TD3 and the evaluation value 66 corresponding to the abnormality level, through the training using each of the tissue image sets TDS1 to TDS3 in the tests 1 to 3. For example, through the training using the tissue image set TDS 1 of the test 1, the estimation model 41 learns that the feature value corresponding to the morphological abnormality of "cellular infiltration" has a higher abnormality level and a larger evaluation value 66 than the feature value corresponding to the morphological abnormality of "eosinophilic change" and "normal". In addition, through the training using the tissue image set TDS2 of the test 2, the estimation model 41 learns that the feature value corresponding to the morphological abnormality of "necrosis" has a higher abnormality level and a larger evaluation value 66 than the feature value corresponding to the morphological abnormality of "cellular infiltration" and "normal". Similarly, through the training using the tissue image set TDS3 of the test 3, the estimation model 41 learns that the feature value corresponding to the morphological abnormality of "eosinophilic change" has a higher abnormality level and a larger evaluation value 66 than the feature value corresponding to "normal".

With such training, in the estimation model 41, a direct comparison between the feature values in each combination of "cellular infiltration" and "eosinophilic change and normal", "necrosis" and "cellular infiltration and normal", and "eosinophilic change" and "normal" is performed, and the estimation model 41 learns an ordering relationship between the evaluation values 66 of the feature values in each combination. As a result, for example, even for combinations that have not been directly compared because the combinations belong to different tissue image sets TDS, such as "necrosis" and "eosinophilic change", the estimation model 41 can learn the ordering relationship between the evaluation values 66 of the respective feature values. That is, as shown in the lower part of FIG. 13, the estimation model 41 is trained so that the evaluation value 66 for the feature value of "necrosis" is the largest and the evaluation value 66 is decreased in the order of "cellular infiltration", "eosinophilic change", and "normal". Therefore, the evaluation value 66 is a value that can be compared between the plurality of patch images 65L belonging to different tissue image sets TDS.

In addition, as described above, in each tissue image set TDS, the label LB is provided to conform to the determination criterion of the drug discovery staff member DS, and thus the magnitude of the evaluation value 66 is in the order conforming to the determination criterion of the drug discovery staff member DS.

In FIG. 13, the range of the evaluation value 66 corresponding to each finding is shown, but this is shown for convenience of description, and a boundary region between the findings is not clearly set. This is because the estimation model 41 according to the present example estimates the scalar value called the evaluation value 66 and does not identify the finding name. As described above, the estimation model 41 outputs the evaluation values 66 of similar magnitude for similar morphological abnormalities. Therefore, as a result, as shown in FIG. 13, the range of the evaluation values 66 is also determined in accordance with the abnormality level of each finding.

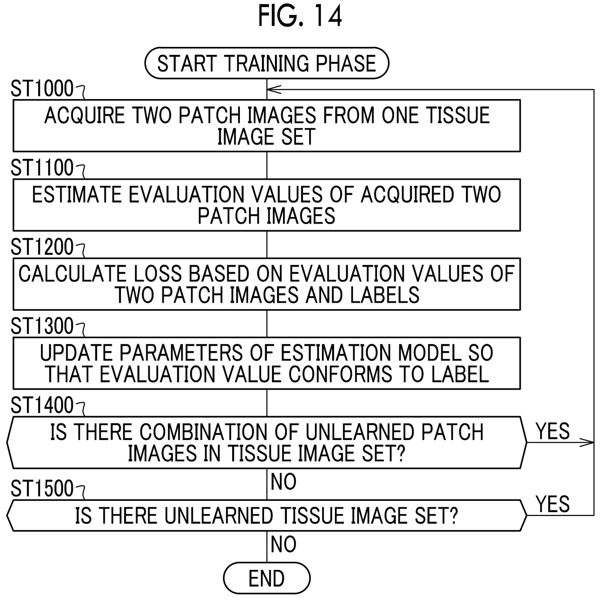

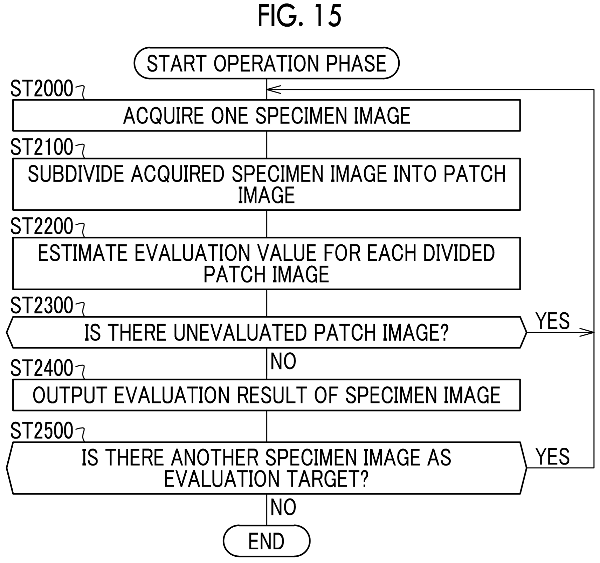

Next, the operation and effects of the configuration described above will be described with reference to the flowcharts shown in FIGS. 14 and 15 as an example. First, in a training phase, the processor 36 of the image processing apparatus 10 executes the learning processing in accordance with the processing procedure shown in the flowchart of FIG. 14. In step ST1000, the processor 36 acquires two patch images 65L from one tissue image set TDS. In step ST1100, the evaluation value 66 of each of the two acquired patch images 65L is estimated. In step ST1200, the processor 36 performs the loss calculation of the pairwise loss based on the evaluation values 66 and the labels LB of the two patch images 65L. In step ST1300, the processor 36 updates the estimation model 41 so that the evaluation value 66 conforms to the label LB. More specifically, the processor 36 adjusts the parameters of the estimation model 41 in accordance with the magnitude of the pairwise loss.

In step ST1400, in a case in which there is a combination of unlearned patch images 65L in the tissue image set TDS (YES in step ST1400), the processor 36 returns to step ST1000. Then, the processing after step ST1000 is repeated for a new combination of the two patch images 65L. In step ST1400, in a case in which there is no unlearned patch image 65L in the tissue image set TDS (NO in step ST1400), the processor 36 proceeds to step ST1500.

In step ST1500, in a case in which there is the unlearned tissue image set TDS (YES in step ST1500), the processor 36 returns to step ST1000 and repeats the processing after step ST1000 for the unlearned tissue image set TDS. The processor 36 repeats the processing of step ST1000 to step ST1400 until the unlearned tissue image set TDS is exhausted.

In the example shown in FIG. 14, the training of the estimation model 41 is repeated with an end condition in which the unlearned patch images 65L and tissue image set TDS are exhausted, but the end condition of the training may be, for example, another condition such as continuing until the pairwise loss becomes equal to or less than a predetermined threshold value.

In an operation phase after the training phase ends, the processor 36 executes evaluation processing of the specimen image 15 in accordance with the processing procedure shown in the flowchart of FIG. 15. In the operation phase, for example, the drug discovery staff member DS evaluates the toxicity of the specimen image 15 of the subject S to which the candidate substance 11 has been administered, using the image processing apparatus 10. In step ST2000, the processor 36 acquires one specimen image 15 selected by the drug discovery staff member DS. In step ST2100, the processor 36 subdivides the specimen image 15 into the plurality of patch images 65 having a predetermined size. In step ST2200, the processor 36 estimates the evaluation value 66 for each divided patch image 65. In step ST2300, in a case in which there is an unevaluated patch image 65 among the divided patch images 65 (YES in step ST2300), the processor 36 returns to step ST2000 and repeats the processing after step ST2000. In a case in which there is no unevaluated patch image 65 (NO in step ST2300), the processor 36 proceeds to step ST2400.

In step ST2400, the processor 36 outputs the evaluation result of the specimen image 15. Specifically, the processor 36 generates the heatmap HMP based on the evaluation value 66 for the liver specimen LVS of the specimen image 15 which is the division source of the patch image 65, and outputs the heatmap HMP as the evaluation result. Since the evaluation value 66 is an indicator of the abnormality level of the morphological abnormality, the heatmap HMP displays the abnormality level of each region of the liver specimen LVS in an identifiable manner as shown in FIG. 2.

In step ST2500, in a case in which there is another specimen image 15 that is the evaluation target, the processor 36 returns to step ST2000 and repeats the processing after step ST2000. In a case in which there is no other specimen image 15 that is the evaluation target, the processor 36 ends the operation phase.

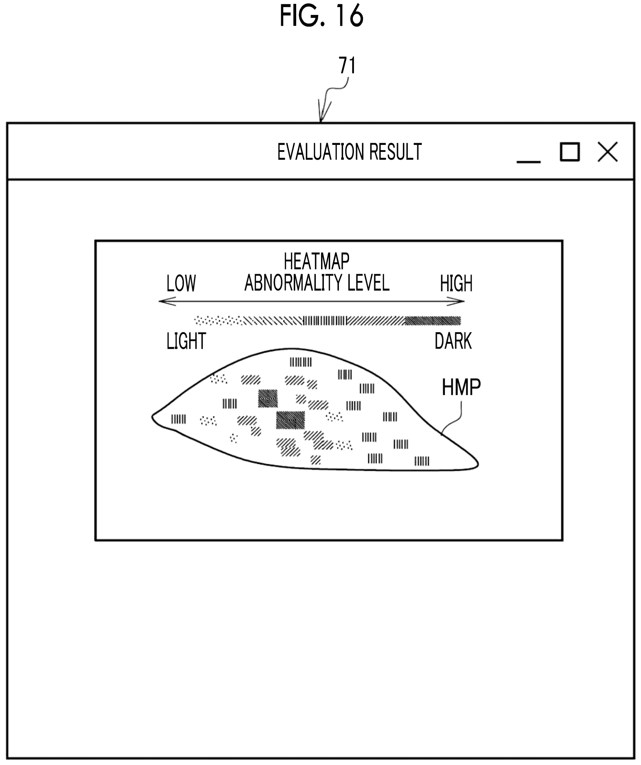

FIG. 16 is an example of a display screen 71 on which the evaluation result is displayed. On the display screen 71, the heatmap HMP and a legend indicating a correspondence between the shade of color and the abnormality level are displayed.

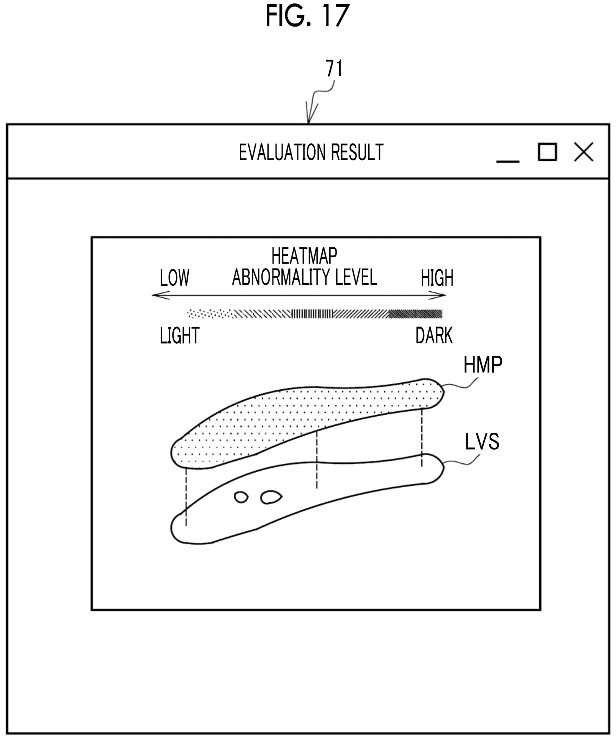

In addition, as shown in FIG. 17, the heatmap HMP may be displayed in a manner in which the heatmap HMP can be superimposed on the liver specimen LVS so that the correspondence between the liver specimen LVS and each region of the heatmap HMP in the specimen image 15 can be seen at a glance. The superimposed display and the separated display of the liver specimen LVS and the heatmap HMP may be switched. The example of FIG. 17 is an example in which the liver specimen LVS and the heatmap HMP are displayed separately in a state in which the correspondence between the respective regions is maintained. In a case in which the liver specimen LVS is displayed separately, it is easy to check the morphological characteristics of the liver specimen LVS.

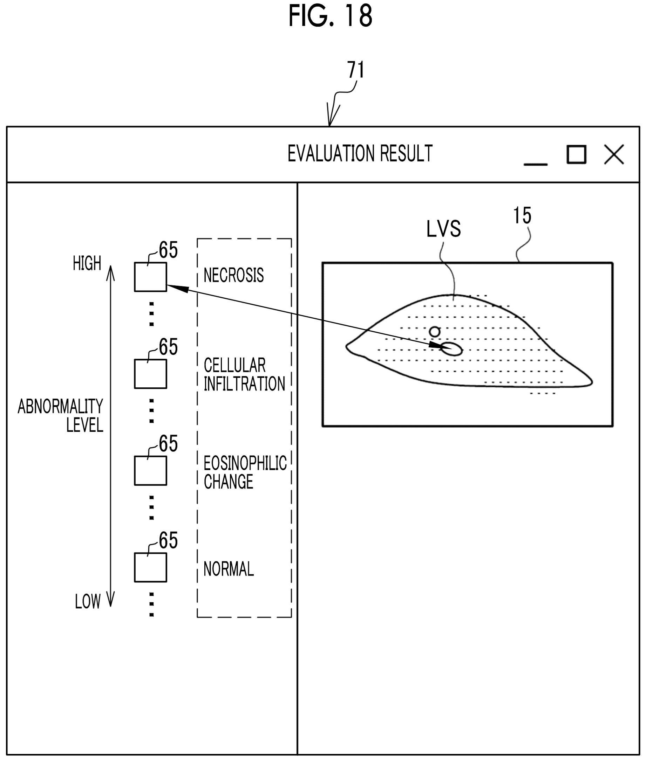

In addition, the heatmap HMP need not be displayed as the evaluation result. For example, as shown in FIG. 18, the evaluated patch images 65 may be displayed in the order of the abnormality level corresponding to the evaluation value 66. In FIG. 18, the respective finding names of "necrosis", "cellular infiltration", and "eosinophilic change" in a dashed rectangular frame are described in the display screen 17, but this is a convenient description for making the description easy to understand, and the finding names are not displayed in the display screen 71. It goes without saying that the finding name may be displayed on the display screen 71. In this case, for example, in addition to the estimation model 41 that estimates the evaluation value 66 based on the patch image 65, a finding name estimation model that estimates the finding name is necessary.

The number of displayed patch images 65 may be all the evaluated patch images 65, or may be limited to a predetermined number of display images, for example, the top 100 images. In a case in which the heatmap HMP is not displayed as described above, it is preferable to display the specimen image 15 side by side with the patch image 65 and to display the correspondence between the patch image 65 and the region of the liver specimen LVS, as shown in FIG. 18. The correspondence is displayed, for example, in a case in which the patch image 65 is designated by an input device such as a mouse, by an arrow connecting the designated patch image 65 and the region in the liver specimen LVS corresponding to the patch image 65. Even in the aspect shown in FIG. 18, the magnitude of the evaluation value 66 of the patch image 65 that is the evaluation target can be displayed to be comparable with the patch image 65 that is the evaluation target.

As described above, the image processing apparatus 10 according to the disclosed technology comprises the processor 36, and estimates the evaluation value 66 in accordance with the morphological characteristics of the patch image 65 (an example of a tissue image) obtained by subdividing the specimen image 15 showing the tissue specimen of the subject 2, using the estimation model 41 (an example of a machine learning model). The estimation model 41 is trained using the plurality of tissue image sets TDS each including the plurality of patch images 65L (an example of training tissue images) used for the training. The relative rank based on the morphological characteristics of the patch image 65L, that is, the relative rank between the patch images 65L in each of the tissue image sets TDS is provided to the plurality of tissue image sets TDS as the labeled information. The training is training in which the estimation model 41 is caused to estimate the evaluation value 66 in accordance with the morphological characteristics of the patch image 65L, and the estimated evaluation value 66 is made to conform to the relative rank provided to the tissue image set TDS to which the patch image 65L belongs. The processor 36 executes the acquisition processing of acquiring the patch image 65 of which the evaluation value 66 is unknown, as the evaluation target, and the estimation processing of estimating the evaluation value 66 of the acquired evaluation target using the trained estimation model 41 that has undergone the training.

As a result, in a case in which the machine learning model that estimates the evaluation value in accordance with the morphological characteristics of the tissue image is used, it is possible to reduce the burden in a case of creating the training data for the machine learning model, as compared with the related art.

As described above, in a case of training the machine learning model such as the estimation model 41 that estimates the evaluation value in accordance with the plurality of types of morphological abnormalities, a method of creating the training data in the related art is a method of ranking the abnormality level of the morphological abnormality on a unified scale and providing an annotation corresponding to the ranked abnormality level to the tissue image. However, the types of morphological abnormalities are various, and thus the specialized knowledge is required for classifying and identifying such various morphological abnormalities. In addition, the determination criterion for the abnormality level varies from person to person. Therefore, it is very difficult to classify and identify the abnormality levels of all the morphological abnormalities with a unified scale from the viewpoint of the accuracy and the uniformity of the determination. In particular, there is an extreme difficulty in a case in which an operator who has little knowledge of the morphological abnormality performs the annotation. In addition, since a very large number of tissue images are required as the training data, the number of tissue images to be subjected to the annotation work is also large. The work of accurately classifying and identifying the morphological abnormalities while observing the morphological abnormalities in detail for a large number of tissue images as described above results in an enormous burden. As described above, the method of creating the training data in the related art has a problem in that the qualitative and quantitative burden of the annotation work is high.

In the image processing apparatus 10 according to the disclosed technology, the label LB to be provided as the labeled information is the relative rank in the tissue image set TDS, and is not the abnormality level itself that needs to be classified and identified on a unified scale. Therefore, in the annotation work, it is sufficient to focus only on the principal morphological characteristics. Therefore, the burden of the annotation work can be reduced as compared with the related art.

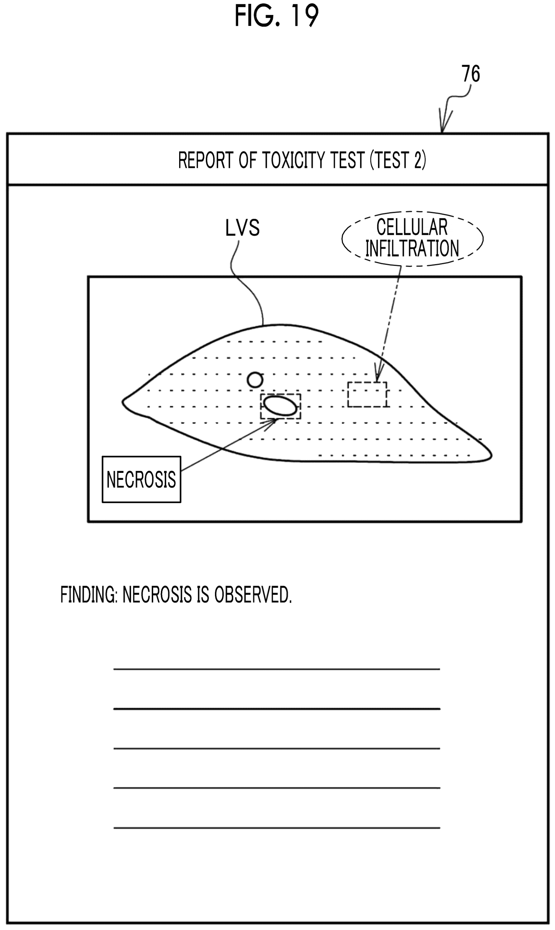

The effect will be described in more detail as follows. Work will be considered in which an annotator views the patch image 65L and provides the label LB in accordance with the abnormality level. In this case, one of the sources that the annotator relies on to determine the abnormality level is, for example, a report of the toxicity test. In many cases, the report describes only the principal abnormal findings considered by the pathologist for each test, together with the tissue image that is the evaluation target. For example, in a report 76 shown in FIG. 19, since "necrosis" is the principal abnormal finding, only the principal abnormal finding such as "necrosis is observed" is described. However, the liver specimen LVS described in the report 76 may contain the abnormal findings such as "cellular infiltration" in addition to "necrosis". In this case, the annotator provides the label of the abnormality level corresponding to "necrosis" to the patch image 65L in which "necrosis" as the principal abnormality is observed in the patch image 65L obtained by subdividing the specimen image 15 showing the liver specimen LVS. On the other hand, since "cellular infiltration" is not described in the report 76, no label is provided to the patch image 65L in which "cellular infiltration" is observed. In the training data in the related art, since effective learning processing cannot be performed in a case in which different labels are not provided to all the morphological abnormalities, in a case in which the morphological abnormality is overlooked, effective learning processing cannot be performed.

On the other hand, in the image processing apparatus 10 according to the disclosed technology, for example, based on the description of the report 76, the label LB of "2" indicating a relatively superior rank is provided to the patch image 65L in which "necrosis" as the principal abnormal finding is observed. Then, the label LB of "1" indicating the relatively inferior rank is provided to the other patch images 65L. That is, in the image processing apparatus 10 according to the disclosed technology, overlooking morphological abnormalities other than the principal abnormal findings is permissible. Therefore, the qualitative and quantitative burden of the annotation work is reduced.

In the learning, as shown in FIGS. 10 to 12, the training is performed so that the evaluation value 66 conforms to the rank indicated by the label LB. As a result, as shown in FIG. 13, the estimation model 41 can estimate the evaluation value 66 that can be compared even between the patch images 65L, which are examples of the tissue images in the tissue image set TDS, as the evaluation value 66 of the patch image 65, which is an example of the tissue image that is the evaluation target. In short, the disclosed technology obtains an effect of reducing the burden in a case of creating the training data by performing weakly supervised learning of training the machine learning model using the training data having an incomplete label LB as compared with the method of creating the training data in the related art.

In addition, in the above-described embodiment, the plurality of tissue image sets TDS each include at least one patch image 65L (an example of a tissue image) having a different relative rank. For example, in each tissue image set TDS, at least one patch image 65L of the label LB of "2" and at least one patch image 65L of the label LB of "1" are included. Therefore, the learning efficiency is improved as compared with a case in which the tissue image set TDS including only the patch images 65L (an example of tissue images) having the same relative rank is used for the training.

In addition, in the above-described embodiment, the relative rank has two levels in one tissue image set TDS. Therefore, it is easy to provide the label LB (an example of labeled information) as compared with a case in which the relative rank has three or more levels.

In the above-described embodiment, the example has been described in which the label LB of "2" is provided to one of the two levels of the rank and the label LB of "1" is provided to the other thereof. However, in a case of the two levels of the rank, for example, an aspect can also be adopted in which the label LB of "2" is provided to one and the label LB is omitted from the other. In this case, since the label LB need only be provided to one of the patch images 65 of different ranks, the burden of the annotation work can be further reduced.

In addition, in the above-described embodiment, the two levels of the rank are distinguished by whether or not the patch image 65L (an example of a tissue image) includes the above-described principal abnormal finding for each test. Therefore, for example, in the annotation work, it is easy to provide the label LB (an example of labeled information) based on the report 76 in which only the principal abnormal findings as shown in FIG. 19 are described.

In each of the plurality of tissue image sets TDS, a plurality of patch images 65L (an example of tissue images) divided from two or more specimen images 15 respectively showing two or more different liver specimens LVS (an example of a tissue specimen) derived from one or more subjects S that have undergone a single test are mixed together. Since the estimation of the morphological abnormality is performed on the plurality of tissue specimens, the generalization performance for the estimation of the morphological abnormality of an unknown tissue specimen may be improved.

In the above-described embodiment, the specimen image 15 is an image obtained by imaging the liver specimen LVS used in the test for evaluating at least one of the drug efficacy or the toxicity of the candidate substance 11 (an example of a substance) to be administered to the subject S, as the liver specimen LVS (an example of a tissue specimen). Therefore, the estimation performance of the morphological abnormality in the evaluation of the test in the drug discovery is improved.

In addition, in the above-described embodiment, the specimen image 15 includes the specimen image 15 (an example of a first specimen image) derived from the administration group, in which the liver specimen LVS (an example of a tissue specimen) of the subject S to which the candidate substance 11 (an example of a substance) has been administered is shown, and the specimen image 15 (an example of a second specimen image) derived from the control group, in which the liver specimen LVS (an example of a tissue specimen) of the subject S to which the candidate substance 11 has not been administered is shown, and the plurality of tissue image sets TDS each include the patch image 65L (an example of a tissue image) divided from the specimen image 15 derived from the administration group and the patch image 65L (an example of a tissue image) divided from the specimen image 15 derived from the control group. As described above, since the tissue image set includes the tissue image derived from the administration group and the tissue image derived from the control group, it is possible to efficiently perform learning of the morphological abnormality caused by the drug efficacy or the toxicity of the substance.

In the above-described embodiment, each of the plurality of tissue image sets TDS is an image set belonging to any of a plurality of test groups having different types of tests. Therefore, it is possible to evaluate various morphological abnormalities observed in a plurality of tests.

In addition, in the above-described embodiment, the relative rank based on the morphological characteristics is the abnormality level of the morphological abnormality, which is an example of morphological characteristics. The abnormality level of the morphological abnormality is an indicator that is generally of interest in the tests such as the toxicity test. Therefore, it is highly useful to estimate the evaluation value 66 indicating such an abnormality level.

The relative rank based on the morphological characteristics may be, for example, the severity of the lesion having the morphological characteristics or the stage of progression of the lesion, in addition to the abnormality level. Since the severity and the stage of progression of the lesion are also indicators of interest in the test, it is highly useful to estimate the evaluation value 66 indicating the severity or the stage of progression.

In addition, in the above-described embodiment, the processor 36 outputs the evaluation result based on the evaluation value 66 estimated for the patch image 65 (an example of a tissue image that is an evaluation target). Since such an output function is provided, it is not necessary to prepare an output device separately from the image processing apparatus 10. In addition to the display on the display and the output to the file, the output aspect includes distribution to a client terminal in a case in which the image processing apparatus 10 is a server.

In addition, in the above-described embodiment, the processor 36 outputs the evaluation result in a form in which the magnitude of the evaluation value 66 for the patch image 65 (an example of a tissue image that is an evaluation target) is comparable with those of the other patch images 65. In the above-described embodiment, the output is performed in a form of the heatmap HMP as shown in FIG. 16 or in a form of the patch images 65 arranged in the order of the evaluation values 66 indicating the abnormality levels as shown in FIG. 18. Therefore, it is easy to identify the patch images 65 having different evaluation values 66.

In addition, in the above-described embodiment, in a case in which a plurality of images divided from one specimen image 15 are used as the patch images 65 (an example of an evaluation target), the processor 36 outputs the evaluation result in a form in which the magnitude of the evaluation value 66 for each region corresponding to the plurality of patch images 65 in the specimen image 15 is identifiable, as shown in the example of the heatmap HMP. As a result, it is easy to identify regions having different evaluation values 66 in the specimen image 15. The heatmap HMP that represents a difference in the evaluation value 66 by the shade of color has been described as a manner in which the magnitude of the evaluation value 66 is identifiable, but an aspect in which, for example, a numerical value of the evaluation value 66 is provided and displayed for each region may be used instead of the shade of color.

In addition, in the above-described embodiment, as shown in FIGS. 16 and 17, the processor 36 generates the heatmap HMP that is superimposable on the specimen image 15 and in which the magnitude of the evaluation value 66 for each region is identifiable by the shade of color. As shown in FIG. 17, the heatmap HMP can be displayed in a superimposed manner on the liver specimen LVS of the specimen image 15. Therefore, it is easy to recognize regions having different evaluation values 66 in the liver specimen LVS of the specimen image 15. The heatmap HMP may be displayed in parallel instead of being superimposed on the specimen image 15. In a case in which the specimen images 15 are displayed in parallel as well, it is possible to identify the magnitude of the evaluation value 66 for each region in the liver specimen LVS of the specimen image 15.

### (Modification Example 1)

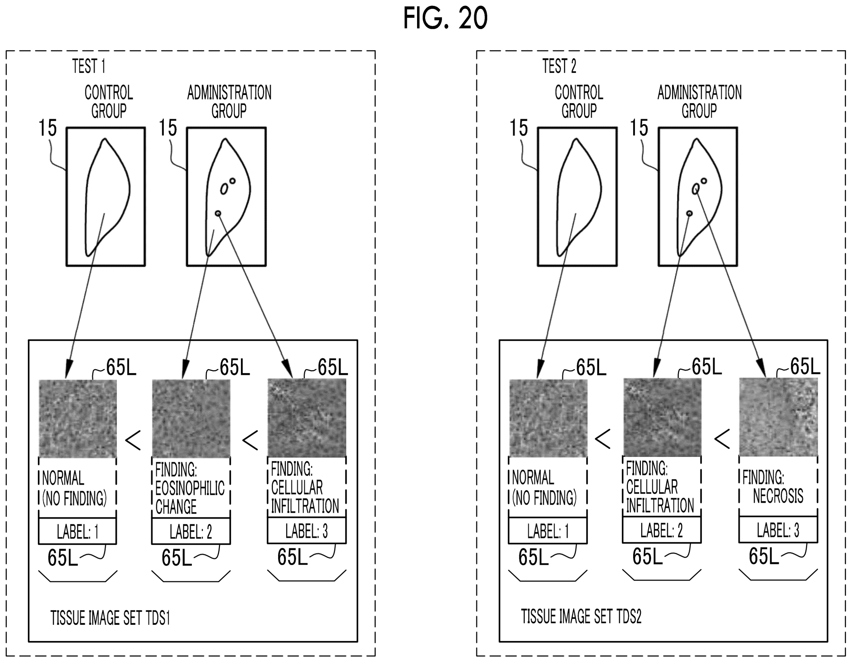

In addition, in the above-described embodiment, as shown in FIG. 9, the example of the two levels of the rank has been described as the example of the relative rank as the labeled information, but as shown in FIG. 20, the relative rank may have three or more levels. In the example shown in FIG. 20, three labels LB of "3", "2", and "1" are provided in accordance with the abnormality level of the morphological abnormality. In Modification Example 1 as well, a larger value of the label LB indicates a higher relative rank.

The organ is not limited to the liver described as an example. The organ may be a stomach, a lung, a small intestine, a large intestine, or the like. The subject S is not limited to the rat. A mouse, a guinea pig, a gerbil, a hamster, a ferret, a rabbit, a dog, a cat, a monkey, or the like may be used.

The image processing apparatus 10 may be the personal computer installed in the pharmaceutical development facility as shown in FIG. 1, or may be a server computer installed in a data center independent of the pharmaceutical development facility.

In a case in which the image processing apparatus 10 is configured by the server computer, the specimen image 15 is transmitted from the personal computer installed in each pharmaceutical development facility to the server computer via a network such as the Internet. The server computer distributes various screens, such as the display screen 71, to the personal computer in a format of screen data for web distribution created using a markup language such as extensible markup language (XML). The personal computer reproduces a screen displayed in a web browser based on the screen data, and displays the reproduced screen on the display. Another data description language such as Javascript (registered trademark) object notation (JSON) may be used instead of XML.

The image processing apparatus 10 according to the disclosed technology can be widely used in all stages of drug development from the setting of the drug discovery target in an initial stage to a clinical trial in a final stage.

The hardware configuration of the computer constituting the image processing apparatus 10 according to the disclosed technology can be variously modified. For example, the image processing apparatus 10 may be configured by a plurality of computers that are separated as hardware, for the purpose of improving processing capability and reliability. The functions of the processor 36 are distributed to, for example, two computers. In this case, the image processing apparatus 10 is configured by two computers.

As described above, the hardware configuration of the computer of the image processing apparatus 10 can be changed as appropriate in accordance with required performance, such as processing capacity, safety, and reliability. Further, it goes without saying that, in addition to the hardware, an application program, such as the operation program 40, can be duplicated or distributed and stored in a plurality of storages for the purpose of securing the safety and the reliability.

In the embodiment described above, the following various processors can be used as a hardware structure of a processing unit such as the processor 36 that executes various types of processing. The various processors include, for example, the CPU 32 which is a general-purpose processor that executes software (operation program 40) to function as various processing units as described above, a programmable logic device (PLD), such as a field programmable gate array (FPGA), which is a processor of which the circuit configuration can be changed after manufacture, and a dedicated electric circuit, such as an application specific integrated circuit (ASIC), which is a processor having a dedicated circuit configuration designed to execute specific processing.

One processing unit may be configured by one of these various processors or by a combination of two or more processors of the same type or different types (for example, a combination of a plurality of FPGAs and/or a combination of a CPU and an FPGA). Further, a plurality of processing units may be configured by one processor.

Examples in which the plurality of processing units are configured by one processor include, first, as represented by a computer, such as a client and a server, a form in which one processor is configured by a combination of one or more CPUs and software, and the processor functions as the plurality of processing units. Second, as represented by a system-on-chip (SoC) or the like, there is a form in which a processor, which implements the functions of the entire system including the plurality of processing units with a single integrated circuit (IC) chip, is used. In this way, as the hardware structure, the various processing units are configured by one or more of the various processors.

Furthermore, as the hardware structure of the various processors, more specifically, an electric circuit (circuitry) in which circuit elements such as semiconductor elements are combined can be used.

The technology described in the following supplementary notes can be understood based on the above description.

### [Supplementary Note 1]

An image processing apparatus comprising a processor, in which an evaluation value in accordance with morphological characteristics of a tissue image obtained by subdividing a specimen image in which a tissue specimen of a subject is shown is estimated using a machine learning model, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, the training is training in which the machine learning model is caused to estimate the evaluation value in accordance with the morphological characteristics of the training tissue image and the estimated evaluation value is made to conform to the relative rank provided in the tissue image set to which the training tissue image belongs, and the processor is configured to execute: acquisition processing of acquiring the tissue image of which the evaluation value is unknown, as an evaluation target; and estimation processing of estimating the evaluation value of the acquired evaluation target using a trained machine learning model that has undergone the training.

### [Supplementary Note 2]

The image processing apparatus according to supplementary note 1, in which the plurality of tissue image sets each include at least one training tissue image having a different relative rank.

### [Supplementary Note 3]

The image processing apparatus according to supplementary note 2, in which the relative rank has two levels in one tissue image set.

### [Supplementary Note 4]

The image processing apparatus according to any one of supplementary notes 1 to 3, in which at least one of the plurality of tissue image sets is an image set in which the plurality of training tissue images divided from two or more specimen images respectively showing two or more different tissue specimens derived from one or more subjects are mixed together.

### [Supplementary Note 5]

The image processing apparatus according to supplementary note 4, in which the specimen image is an image showing a tissue specimen used in a test for evaluating at least one of drug efficacy or toxicity of a substance administered to the subject, as the tissue specimen.

### [Supplementary Note 6]

The image processing apparatus according to supplementary note 5, in which the specimen image includes a first specimen image showing the tissue specimen of the subject to which the substance has been administered and a second specimen image showing the tissue specimen of the subject to which the substance has not been administered, and the plurality of tissue image sets each include, as the training tissue image, a first training tissue image divided from the first specimen image and a second training tissue image divided from the second specimen image.

### [Supplementary Note 7]

The image processing apparatus according to supplementary note 6, in which the plurality of tissue image sets are each composed of only the plurality of training tissue images derived from one subject that have undergone a single test.

### [Supplementary Note 8]

The image processing apparatus according to supplementary note 7, in which the relative rank has two levels in one tissue image set, and the two levels of the rank are distinguished by whether or not the training tissue image includes a principal abnormal finding for each test for evaluating at least one of drug efficacy or toxicity of a substance administered to the subject.

### [Supplementary Note 9]

The image processing apparatus according to any one of supplementary notes 1 to 9, in which the relative rank based on the morphological characteristics is provided based on any one of an abnormality level of the morphological characteristics, severity of a lesion having the morphological characteristics, or a stage of progression of the lesion.

### [Supplementary Note 10]

The image processing apparatus according to any one of supplementary notes 1 to 9, in which the processor is configured to output an evaluation result based on the evaluation value estimated for the evaluation target.

### [Supplementary Note 11]

The image processing apparatus according to supplementary note 10, in which the processor is configured to output the evaluation result in a form in which magnitude of the evaluation value of the evaluation target is comparable with magnitude of the evaluation value of another evaluation target.

### [Supplementary Note 12]

The image processing apparatus according to supplementary note 11, in which the processor is configured to, in a case in which a plurality of images divided from one specimen image are used as the evaluation targets, output the evaluation result in a form in which magnitude of the evaluation value for each region corresponding to a plurality of the evaluation targets in the specimen image is identifiable.

### [Supplementary Note 13]

The image processing apparatus according to supplementary note 12, in which the processor is configured to generate a heatmap that is superimposable on the specimen image and in which the magnitude of the evaluation value for each region is identifiable by a shade of color.

### [Supplementary Note 14]

An operation method of an image processing apparatus including a processor, in which an evaluation value in accordance with morphological characteristics of a tissue image obtained by subdividing a specimen image in which a tissue specimen of a subject is shown is estimated using a machine learning model, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, the training is training in which the machine learning model is caused to estimate the evaluation value in accordance with the morphological characteristics of the training tissue image and the estimated evaluation value is made to conform to the relative rank provided in the tissue image set to which the training tissue image belongs, and the operation method comprises causing the processor to execute: acquisition processing of acquiring the tissue image of which the evaluation value is unknown, as an evaluation target; and estimation processing of estimating the evaluation value of the acquired evaluation target using a trained machine learning model that has undergone the training.

### [Supplementary Note 15]

An operation program of an image processing apparatus including a processor, the operation program causing a computer to function as the image processing apparatus, in which an evaluation value in accordance with morphological characteristics of a tissue image obtained by subdividing a specimen image in which a tissue specimen of a subject is shown is estimated using a machine learning model, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, the training is training in which the machine learning model is caused to estimate the evaluation value in accordance with the morphological characteristics of the training tissue image and the estimated evaluation value is made to conform to the relative rank provided in the tissue image set to which the training tissue image belongs, and the operation program causes the computer to execute: acquisition processing of acquiring the tissue image of which the evaluation value is unknown, as an evaluation target; and estimation processing of estimating the evaluation value of the acquired evaluation target using a trained machine learning model that has undergone the training.

### [Supplementary Note 16]

A learning apparatus comprising a processor, in which the learning apparatus trains a machine learning model that estimates an evaluation value in accordance with morphological characteristics of a tissue image obtained by subdividing a specimen image in which a tissue specimen of a subject is shown, the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, and the training is training in which the machine learning model is caused to estimate the evaluation value in accordance with the morphological characteristics of the training tissue image and the estimated evaluation value is made to conform to the relative rank provided in the tissue image set to which the training tissue image belongs.

The disclosed technology can also be combined with various embodiments and/or various modification examples described above, as appropriate. In addition, it goes without saying that the disclosed technology is not limited to the embodiment described above, various configurations can be adopted as long as the configuration does not deviate from the gist. Further, the disclosed technology includes, in addition to the program, a storage medium that stores the program in a non-transitory manner.

The above-described contents and the above-shown contents are the detailed description of the parts according to the disclosed technology, and are merely an example of the disclosed technology. For example, the above descriptions of the configuration, the function, the operation, and the effect are the descriptions of examples of the configuration, the function, the operation, and the effect of the parts according to the disclosed technology. Therefore, it goes without saying that unnecessary parts may be deleted, new elements may be added, or replacements may be made with respect to the above-described contents and the above-shown contents within a range that does not deviate from the gist of the disclosed technology. In order to avoid complications and facilitate understanding the parts according to the disclosed technology, in the above-described contents and the above-shown contents, the description of technical general knowledge and the like that do not particularly require description for enabling the implementation of the disclosed technology are omitted.

In the present specification, "A and/or B" has the same meaning as "at least one of A or B". Stated another way, "A and/or B" means that it may be only A, only B, or a combination of A and B. Further, in the present specification, also in a case in which three or more matters are expressed in association by "and/or", the same concept as "A and/or B" is applied.

The disclosure of Japanese Patent Application No. 2023-075855, filed on May 1, 2023, is incorporated in the present specification by reference in its entirety. Further, all of the documents, the patent applications, and the technical standards described in the present specification are incorporated herein by reference to the same extent as in a case in which each document, each patent application, and each technical standard are specifically and individually described by being incorporated in the present specification by reference.

## Claims

1. An image processing apparatus comprising a processor,
wherein an evaluation value in accordance with morphological characteristics of a tissue image obtained by subdividing a specimen image in which a tissue specimen of a subject is shown is estimated using a machine learning model,
the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets,
the training is training in which the machine learning model is caused to estimate the evaluation value in accordance with the morphological characteristics of the training tissue image and the estimated evaluation value is made to conform to the relative rank provided in the tissue image set to which the training tissue image belongs, and
the processor is configured to execute:
acquisition processing of acquiring the tissue image of which the evaluation value is unknown, as an evaluation target; and
estimation processing of estimating the evaluation value of the acquired evaluation target using a trained machine learning model that has undergone the training.

2. The image processing apparatus according to claim 1,
wherein the plurality of tissue image sets each include at least one training tissue image having a different relative rank.

3. The image processing apparatus according to claim 2,
wherein the relative rank has two levels in one tissue image set.

4. The image processing apparatus according to claim 1,
wherein at least one of the plurality of tissue image sets is an image set in which the plurality of training tissue images divided from two or more specimen images respectively showing two or more different tissue specimens derived from one or more subjects are mixed together.

5. The image processing apparatus according to claim 4,
wherein the specimen image is an image showing a tissue specimen used in a test for evaluating at least one of drug efficacy or toxicity of a substance administered to the subject, as the tissue specimen.

6. The image processing apparatus according to claim 5,
wherein the specimen image includes a first specimen image showing the tissue specimen of the subject to which the substance has been administered and a second specimen image showing the tissue specimen of the subject to which the substance has not been administered, and
the plurality of tissue image sets each include, as the training tissue image, a first training tissue image divided from the first specimen image and a second training tissue image divided from the second specimen image.

7. The image processing apparatus according to claim 6,
wherein the plurality of tissue image sets are each composed of only the plurality of training tissue images derived from one or more subjects that have undergone a single test.

8. The image processing apparatus according to claim 7,
wherein the relative rank has two levels in one tissue image set, and
the two levels of the rank are distinguished by whether or not the training tissue image includes a principal abnormal finding for each test.

9. The image processing apparatus according to claim 1,
wherein the relative rank based on the morphological characteristics is provided based on any one of an abnormality level of the morphological characteristics, severity of a lesion having the morphological characteristics, or a stage of progression of the lesion.

10. The image processing apparatus according to claim 1,
wherein the processor is configured to output an evaluation result based on the evaluation value estimated for the evaluation target.

11. The image processing apparatus according to claim 10,
wherein the processor is configured to output the evaluation result in a form in which magnitude of the evaluation value of the evaluation target is comparable with magnitude of the evaluation value of another evaluation target.

12. The image processing apparatus according to claim 10,
wherein the processor is configured to,
in a case in which a plurality of images divided from one specimen image are used as the evaluation targets,
output the evaluation result in a form in which magnitude of the evaluation value for each region corresponding to a plurality of the evaluation targets in the specimen image is identifiable.

13. The image processing apparatus according to claim 12,
wherein the processor is configured to generate a heatmap that is superimposable on the specimen image and in which the magnitude of the evaluation value for each region is identifiable by a shade of color.

14. An operation method of an image processing apparatus including a processor,
wherein an evaluation value in accordance with morphological characteristics of a tissue image obtained by subdividing a specimen image in which a tissue specimen of a subject is shown is estimated using a machine learning model,
the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets,
the training is training in which the machine learning model is caused to estimate the evaluation value in accordance with the morphological characteristics of the training tissue image and the estimated evaluation value is made to conform to the relative rank provided in the tissue image set to which the training tissue image belongs, and
the operation method comprises causing the processor to execute:
acquisition processing of acquiring the tissue image of which the evaluation value is unknown, as an evaluation target; and
estimation processing of estimating the evaluation value of the acquired evaluation target using a trained machine learning model that has undergone the training.

15. An operation program of an image processing apparatus including a processor, the operation program causing a computer to function as the image processing apparatus,
wherein an evaluation value in accordance with morphological characteristics of a tissue image obtained by subdividing a specimen image in which a tissue specimen of a subject is shown is estimated using a machine learning model,
the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets,
the training is training in which the machine learning model is caused to estimate the evaluation value in accordance with the morphological characteristics of the training tissue image and the estimated evaluation value is made to conform to the relative rank provided in the tissue image set to which the training tissue image belongs, and
the operation program causes the computer to execute:
acquisition processing of acquiring the tissue image of which the evaluation value is unknown, as an evaluation target; and
estimation processing of estimating the evaluation value of the acquired evaluation target using a trained machine learning model that has undergone the training.

16. A learning apparatus comprising a processor,
wherein the learning apparatus trains a machine learning model that estimates an evaluation value in accordance with morphological characteristics of a tissue image obtained by subdividing a specimen image in which a tissue specimen of a subject is shown,
the machine learning model is trained using a plurality of tissue image sets each including a plurality of training tissue images that are the tissue images used for training, the plurality of tissue image sets being provided, as labeled information, with a relative rank based on the morphological characteristics of the training tissue image, which indicates a relative rank between the training tissue images in each of the tissue image sets, and
the training is training in which the machine learning model is caused to estimate the evaluation value in accordance with the morphological characteristics of the training tissue image and the estimated evaluation value is made to conform to the relative rank provided in the tissue image set to which the training tissue image belongs.
